# EUROPÄISCHE PATENTSCHRIFT

(11) **EP 3 853 159 B1**
(45) Veröffentlichungstag und Bekanntmachung des Hinweises auf die Patenterteilung: **31.08.2022**
(21) Anmeldenummer: 19816495.6
(22) Anmeldetag: 16.09.2019
(51) Int. Cl.: B65G 47/91, B23Q 7/04, B25J 15/00, B65G 61/00

(54) **VAKUUMGREIFER, ZUFÜHREINHEIT SOWIE VERFAHREN ZUM TRANSPORT VON FLÄCHIGEN BAUTEILEN**
VACUUM GRIPPER, FEED UNIT, AND METHOD FOR CONVEYING FLAT COMPONENTS
PRÉHENSEUR À VIDE, UNITÉ D'AMENÉE ET PROCÉDÉ DE TRANSPORT DE COMPOSANTS PLATS

(30) Priorität: 20.09.2018 AT 508032018; 19.10.2018 AT 509082018
(43) Veröffentlichungstag der Anmeldung: 28.07.2021
(73) Patentinhaber: TRUMPF Maschinen Austria GmbH & Co. KG., 4061 Pasching (AT)
(72) Erfinder: DAL LAGO, Matteo, 37044 Cologna Veneta (VR) (IT); SPEZIALI, Stefano, 06034 Foligno (PG) (IT)
(74) Vertreter: Burger, Hannes
(86) Internationale Anmeldenummer: PCT/AT2019/060305
(87) Internationale Veröffentlichungsnummer: WO 2020/056438

(56) Entgegenhaltungen:
- EP-A1- 2 149 521
- CN-A- 106 395 375
- CN-A- 108 147 123
- DE-U1-202005 013 790
- DE-U1-202012 009 650
- JP-A- 2013 154 968
- JP-A- 2013 248 695
- JP-B1- S4 947 785
- US-A- 5 079 903

## Beschreibung

Die Erfindung betrifft eine Zuführeinheit und ein Verfahren zum Transport von flächigen Bauteilen, insbesondere Blechteilen.

Dabei ist ein automatisierter Vakuumgreifer vorgesehen, welcher ein Tragteil, auf welchem eine Mehrzahl von zweiten Saugern angeordnet ist und zumindest ein Tragteilelement, auf welchem eine Mehrzahl von ersten Saugern angeordnet ist, umfasst. Das zumindest eine Tragteilelement ist mittels zumindest einer Lageranordnung schwenkbar an dem Tragteil gelagert.

In modernen Bearbeitungszentren erfolgt der Werkstück- bzw. Bauteiltransport häufig vollautomatisiert. Um Beschädigungen der Bauteiloberfläche zu vermeiden, oder auch eine Vielzahl gleicher Bauteile greifen zu können, hat sich die Verwendung von Vakuumgreifern weithin etabliert. Gerade für die gezielte Manipulation von Blechteilen, welche einer Biegemaschine zugeführt, in dieser positioniert und von dieser im umgeformten Zustand weitertransportiert werden, bietet die Verwendung von Vakuumgreifern deutliche Vorteile gegenüber herkömmlichen Zangengreifern und dergleichen.

Dem Fachmann sind zur Aufnahme von einzelnen Bauteilen oder Werkstücken mittels einer Mehrzahl von Saugnäpfen an einem gemeinsamen Greiferkopf eines gattungsgemäßen Vakuumgreifers verschiedene Ansätze bekannt.

Beispielsweise stellt die US 2015/0147141 A1 ein Verfahren vor, in welchem ein Greiferkopf mit einer Mehrzahl von Saugnäpfen vor, welche einem ersten und zweiten Vakuumkreis zugeordnet sind und verwendet werden, um Werkstücke aus einem Behälter zu greifen und zu transportieren. Der Greiferkopf in US 2015/0147141 A1 umfasst dabei eine oder mehrere Reihen von Saugnäpfen, welche gemeinsam einem ersten gemeinsamen Vakuumkreis zugeordnet sind, und eine zweite Reihe von Saugnäpfen, welche einem zweiten Vakuumkreis zugeordnet sind. Der zweite Vakuumkreis kann dabei gezielt angesteuert werden um nur an den erforderlichen Saugnäpfen des zweiten Vakuumkreises effektiv ein Vakuum zu erzeugen. Eine derartige Anordnung bietet jedoch bei größeren Bauteilen, zu deren Transport eine Mehrzahl von Saugnäpfen gleichzeitig erforderlich sind, keinen Vorteil. Zudem erfolgt lediglich bei der Aufnahme eine Kontrolle mittels Drucksensoren an jedem Saugnapf ob ein ausreichend großer Unterdruck aufgebaut werden kann, welche Kontrolle mittels Drucksensoren bei einem falsch eingelegten oder fehlenden Bauteil nicht möglich ist.

Ebenso sind dem Fachmann eine Reihe von Vorrichtungen zum Aufgreifen, zeitweiligen Fixieren und Transport von Bauteilen mit unterschiedlicher Größe bekannt, wobei nur jene Saugnäpfe eines Greiferkopfs aktiv sind, also vakuumbeaufschlagt werden, welche zur Form des Bauteils korrespondieren. Stellvertretend sei hier die EP 0657673 B1 genannt, in welcher ein Greiferkopf mit einer Mehrzahl von Saugnäpfen vorgestellt wird, wobei die Saugnäpfe in einzelne, bedarfsmäßig ansteuerbare Gruppen zusammengefasst sind. Die EP 0657673 B1 offenbart hierbei eine Gruppe von fixen und zwei Gruppen von höhenverstellbaren Saugnäpfen, wobei die höhenverstellbaren Saugnäpfe abhängig von der ermittelten Größe eines Bauteils aktiv oder bei Bedarf funktionslos geschalten werden können. Die fixen und höhenverstellbaren Gruppen sind unterschiedlichen, allerdings gemeinsamen Vakuumkreisen mit separaten Leitungen zu einer gemeinsamen Pumpe zugeordnet. Durch die Anordnung der unterschiedlichen Saugnäpfe in Gruppen bzw. Vakuumkreise kann zwar die "Form" eines ebenen Bauteils bedarfsgemäß durch Ansteuerung der Saugnäpfe nachempfunden werden, allerdings kann ein lokales Versagen oder eine undichte Stelle an einem Saugnapf immer noch beim Transport des Bauteils zu einem Verrutschen oder sogar Verlust des Bauteils führen.

Eine weitere Herausforderung für sichere Vakuumgreifer stellen die zunehmenden Bearbeitungsgeschwindigkeiten dar, welche eine ebenfalls zunehmende Transport- und Positioniergeschwindigkeit erforderlich machen. Die Fliehkräfte auf die gehaltenen Bauteile steigen dadurch ebenso an, wodurch es bei einer fehlerhaften Kontaktierung des Vakuumgreifers zu einem Verlust des Bauteils kommen kann. Im Falle von oftmals scharfkantigen Blechteilen kann ein derartiger Bauteilverlust zu einer unkontrollierten Bewegung im Bearbeitungsbereich kommen. Bislang wurden zum Schutz der Mitarbeiter und/oder benachbarter Anlagen Schutzzäune verwendet, welche den Bearbeitungsbereich begrenzen. Schutzzäune sind jedoch eine verhältnismäßig starre Begrenzung und teuer in der Errichtung. Zudem ist ein Versetzen der Bearbeitungsanlage an einen anderen Platz in einer Fertigungshalle sehr aufwändig, da eine Demontage der Schutzzäune, sowie deren Montage und Einrichtung sämtlicher Sicherheitsvorkehrungen erforderlich ist.

Weiters sind Vakuumgreifer bekannt, welche aus einem biegesteifen Tragteil und zumindest einem Tragteilelement bestehen, wobei eine Mehrzahl von Saugern an dem zumindest einen Tragteilelement angeordnet ist. Beispielhaft hierfür kann die EP 2476637 B1 genannt werden.

Auch gehen aus dem Stand der Technik Zuführeinheiten für flächige Bauteile hervor, welche eine rahmenartige Tragstruktur aufweisen, auf welcher eine Förderstrecke angeordnet ist. Die DE 102016110542 A1 weist zudem eine oder mehrere Greifvorrichtungen auf. 2. Die CN 106 395 375 A offenbart eine Zuführeinheit nach dem Oberbegriff des Anspruchs 1.

Aufgabe der vorliegenden Erfindung war es, die Nachteile des Standes der Technik zu überwinden und eine Vorrichtung und ein Verfahren zur Verfügung zu stellen, mittels derer ein Bauteil durch Anlegen eines Vakuums einfach und sicher ergriffen und transportiert werden kann, wobei auch Bauteile mit unterschiedlichen Bauteilabmessungen prozesssicher transportiert werden sollen.

Diese Aufgabe wird durch eine Zuführeinheit gemäß Anspruch 1 und ein Verfahren gemäß Anspruch 16 gelöst.

Der automatisierte Vakuumgreifer für flächige Bauteile der erfindungsgemäßen Zuführeinheit umfasst an zumindest einer Seite eines Tragteils des Vakuumgreifers ein Tragelement, welches mit seiner von der Mehrzahl von ersten Saugern definierten ersten Ansaugebene von einer, bezüglich der zweiten von dem Tragteil definierten Ansaugebene winkelig ausgerichteten Bereitschaftsposition in eine bezüglich der zweiten Ansaugebene deckungsgleiche Arbeitsposition und vice versa um die zumindest eine Lageranordnung schwenkbar ist.

Eine Ansaugebene wird durch die Unterseite bzw. Wirkungsebene der Sauger definiert.

Eine derartige Maßnahme kann die Versatilität des automatisierten Vakuumgreifers für unterschiedliche Bauteilgrößen deutlich erhöhen. Das zumindest eine Tragteilelement kann seitlich am Tragteil angeordnet sein und bei Bedarf, also im Falle einer größeren Anzahl erforderlicher Sauger bei größeren Bauteilabmessungen, einfach "heruntergeklappt" werden. Die Tragteilelemente können somit zusätzliche Sauger aufweisen, wobei eine Zuordnung und/oder Ansteuerung der einzelnen Sauger zu einem ersten und/oder zweiten Vakuumkreis erfolgen kann. Einhergehend können die an den Tragteilelementen angeordneten Sauger in separat ansteuerbare zusätzliche Gruppen unterteilt werden, um eine einfache Ansteuerung zu ermöglichen. Ebenso können die Tragteilelemente bevorzugt über mechanische und/oder pneumatische Antriebe mit dem Tragteil verbunden sein, wodurch ein automatisierter Betrieb begünstigt wird. Hiermit kann eine aktive bzw. steuerungstechnisch kontrollierte Verstellung aus einer Bereitschaftsposition in eine Ansaugposition erfolgen.

Die Bereitschaftsposition ist dabei durch eine gegenüber der Arbeitsposition win-kelige bzw. abgewinkelte Stellung definiert, wobei es sich um einen Winkel größer 0 handelt, in welcher sich die ersten Sauger des Tragteilelements nicht in Eingriff mit einem Bauteil befinden.

Der Vakuumgreifer ist somit vortrefflich für den automatisierten Einsatz geeignet, wobei beim erfindungsgemäßen Verfahren zum Transport der Bauteile, insbesondere Blechteile oder Metallplatten, zumindest die folgenden Verfahrensschritte ausgeführt werden:
- Bereitstellen einer Zuführeinheit gemäß zumindest einem der Ansprüche 1 bis 15
- Verbringen des zumindest einen Tragteilelements von der Mehrzahl von ersten Saugern definierten ersten Ansaugebene ausgehend von einer bezüglich der zweiten Ansaugebene winkelig ausgerichteten Bereitschaftsposition in eine bezüglich der zweiten Ansaugebene deckungsgleiche Arbeitsposition;
- Aufgreifen eines Bauteils mittels des Vakuumgreifers;
- Verfahren von Förderelementen der Förderstrecke aus einem Speicher;
- Aufnahme des Bauteils durch Förderelemente der Förderstecke;
- Lösen des Vakuumgreifers vom Bauteil;
- Transport des Bauteils auf der Förderstrecke zu einer Biegeanlage;
- Übergabe des Bauteils an die Biegeanlage.

Durch die flexible Anpassbarkeit des Vakuumgreifers an unterschiedliche Bauteilgrößen, können mit ein und demselben Greifer auch sehr große Blechteile oder Metallplatten sicher aufgegriffen und transportiert werden. Durch die Möglichkeit, nicht in Verwendung befindliche Seitenteile des Vakuumgreifers einfach wegklappen zu können und somit Platz zu sparen, ist es mit dem Vakuumgreifer auch möglich, Bauteile unter engen Platzverhältnissen handzuhaben, bzw. Bauteile von dicht nebeneinander positionierten Bauteilstapeln selektiv hochzuheben. Die Bauteile je Bauteilstapel der Bauteilstapelanordnung können dabei unterschiedliche Bauteilgrößen aufweisen, wobei der Vakuumgreifer an die jeweiligen Bauteilgrößen relativ einfach angepasst werden kann.

Des Weiteren kann es zweckmäßig sein, wenn die ersten Sauger des Tragteilelements zueinander die gleiche Dimension, in Bezug auf Höhe und/oder Durchmesser aufweisen. Damit kann sichergestellt werden, dass auf die gesamte Fläche, auf welcher sich die Sauger des Tragteilelements in Eingriff befinden, eine gleichmäßig verteilte Saugkraft aufgebracht wird. Es ist auch denkbar, dass auf den einzelnen einem Tragteil zugeordneten unterschiedlichen Tragteilelementen, Sauger unterschiedlicher Dimension, in Bezug auf Höhe und/oder Durchmesser zugeordnet sind. Im Falle, dass ein schwerer Bauteil aufgegriffen werden soll, kann ein Tragteilelement mit größeren Saugerdimensionen hinzugezogen, insbesondere in eine Arbeitsposition geklappt werden, um den Bauteil sicher zu halten bzw. mit erhöhter Saugkraft aufzunehmen.

Durch das Vorsehen unterschiedlich hoher Sauger - in Bezug auf deren Ansaugrichtung - besteht die Möglichkeit mit dem Vakuumgreifer Bauteile nicht-planarer Geometrien aufzunehmen.

Ferner kann vorgesehen sein, dass die zweiten Sauger des Tragteils zueinander eine unterschiedliche Dimension, in Bezug auf Höhe und/oder Durchmesser aufweisen. Mit diesem Aufbau kann wiederum sichergestellt werden, dass ein aufzugreifender Bauteil in der Bauteilmitte durch Sauger größerer Dimension, mit welchen eine höhere Saugkraft aufgebracht werden kann, sicher gehalten wird. Als Vorteil kann hier weiters genannt werden, dass ein Aufbringen einer höheren Saugkraft im Bereich der Bauteilmitte, in Bezug auf die Bauteillängsachse, ein seitliches Verkippen des Bauteils während des Anhebens verhindert werden kann.

Darüber hinaus kann vorgesehen sein, dass die ersten Sauger an einen ersten Vakuumkreis angeschlossen sind und dass die zweiten Sauger an einen zweiten Vakuumkreis angeschlossen sind. Vorteilhafterweise kann durch das Vorsehen von getrennten Kreisen eine Redundanz geschaffen werden, damit bei Ausfall eines Vakuumkreises, die Sauger, welche dem weiteren Vakuumkreis zugeordnet sind, den Bauteil weiterhin halten können. Auch kann mit diesem Aufbau mit zwei unterschiedlichen Vakuumkreisen in einem Vakuumkreis ein höheres Vakuum auf einen Teilbereich des Bauteils aufgebracht werden, womit wiederum auch schwerere Bauteile sicher gehalten werden können.

Vorteilhaft ist auch eine Ausprägung, gemäß welcher vorgesehen sein kann, dass die Stellanordnung einen mechanischen und/oder pneumatischen Stellantrieb umfasst, wodurch ein automatisierter Betrieb begünstigt wird. Eines oder mehrere Tragteileelemente können somit bei Bedarf, je nach Größe des aufzugreifenden Bauteils bzw. je nach den vorliegenden Platzverhältnissen, einfach und schnell in eine Arbeitsposition gebracht werden.

Gemäß einer Weiterbildung ist es möglich, dass das Tragteilelement wiederum mehrere gelenkig miteinander verbundene Tragteil-Einzelelemente umfasst. Dadurch kann einerseits wiederum die flexible Anpassbarkeit an verschiedene Bauteilgrößen erhöht werden und andererseits können damit auch Bauteile mit unterschiedlichen, nicht-planen Geometrien, mit dem Vakuumsauger transportiert werden.

Die gelenkig miteinander verbundenen Tragteil-Einzelelemente, können wiederum mit mechanischen und/oder pneumatischen Antrieben versehen sein.

Ferner kann es zweckmäßig sein, wenn am Tragteil an einander gegenüberliegenden Seiten jeweils ein Tragteilelement vorgesehen ist. Diese können entweder einzeln oder gemeinsam in eine Arbeitsposition abgeklappt werden, um einen sicheren Eingriff über die gesamte Bauteilbreite zu ermöglichen.

Die erfindungsgemäße Zuführeinheit für flächige Bauteile, wie Blechteile oder Metallplatten, zu einer Biegemaschine einer Biegeanlage, umfasst
- eine rahmenartige Tragstruktur;
- einen Vakuumgreifer für flächige Bauteile, umfassend einen Tragteil, zumindest ein Tragteilelement, eine Mehrzahl von ersten Saugern, welche Mehrzahl von ersten Saugern an dem zumindest einen Tragteilelement angeordnet sind und eine erste Ansaugebene definieren;
- eine der rahmenartigen Tragstruktur zugeordneten portalartigen Führungsstruktur für den Vakuumgreifer;
- eine Förderstrecke, welche in den Seitenteilen der rahmenartigen Tragstruktur verläuft;
- zumindest eine Lageranordnung und zumindest eine Stellanordnung, wobei das zumindest eine Tragteilelement mittels der zumindest einen Stellanordnung um die zumindest eine Lageranordnung schwenkbar an dem Tragteil gelagert ist, und der Vakuumgreifer mit einer Mehrzahl von zweiten Saugern an dem Tragteil angeordnet sind, wobei die Mehrzahl von zweiten Saugern eine zweite Ansaugebene definieren, und wobei das zumindest eine

Tragteilelement mit seiner von der Mehrzahl von ersten Saugern definierten ersten Ansaugebene von einer, bezüglich der zweiten Ansaugebene winkelig ausgerichteten Bereitschaftsposition in eine bezüglich der zweiten Ansaugebene deckungsgleiche Arbeitsposition und vice versa um die zumindest eine Lageranordnung schwenkbar ist; wobei die Förderstrecke ausbildenden Förderelemente gegenüber einer Speichereinheit ein- und ausfahrbar sind.

Vorteilhafterweise kann durch den genannten Aufbau ein mit dem Vakuumgreifer aufgegriffener Bauteil auf der Förderstrecke abgelegt und zur Biegeanlage weitertransportiert werden. Hierbei kann eine für den Biegevorgang gewünschte Ausrichtung des Bauteils erreicht werden, indem an der Förderstrecke ein zusätzliches Anschlagelement vorgesehen ist.

Durch den genannten Aufbau, gemäß welchem die die Förderstrecke ausbildenden Förderelemente gegenüber einer Speichereinheit ein- und ausfahrbar sind, kann der Aufnahmeort für die Bauteile unterhalb der Förderstrecke angeordnet sein. Hierbei können die Bauteile in Form von Bauteilstapeln auf Paletten lagern, wobei hier auch vorgesehen sein kann, dass auf den Paletten Bauteile unterschiedlicher Größe liegen. Je nach für die Weiterverarbeitung notwendiger Bauteilgröße, kann mithilfe des Bauteilgreifers, ein Bauteil von einem Stapel, auf welchem Bauteile der gewünschten Bauteilgröße lagern, aufgenommen werden.

In die Speichereinheit können dabei einzelne Förderelemente oder die Förderelemente der gesamten Förderstrecke ein- und ausgefahren werden.

Mit dem Aufbau der Förderstrecke und der Lagerung von Bauteilstapeln unter der Förderstrecke, kann die Förderstrecke auch bei engen Platzverhältnissen eingesetzt werden, da der typischerweise ungenutzte Raum unter der Förderstrecke genutzt werden kann. Des Weiteren kann vorgesehen sein, dass die portalartige Führungsstruktur für einen Vakuumgreifer einen, bevorzugt mehrachsig, beweglichen Tragarm aufweist, an welchem der Vakuumgreifer angeordnet ist. Der bewegliche Tragarm ermöglicht, den Vakuumgreifer zu unterschiedlichen Bauteilstapeln zu verfahren und die Bauteile eines bestimmten Bauteilstapels direkt vom Lagerort unter der Förderstrecke aufzunehmen.

Gemäß einer besonderen Ausprägung ist es möglich, dass der Vakuumgreifer an dem Tragarm um eine horizontal verlaufende Gelenksachse gelenkig gelagert ist. Beim Aufgreifen eines Bauteils kann der Vakuumgreifer gemeinsam mit dem darauf befindlichen Bauteil schwerkraft- bzw. schwerpunktbedingt in eine winkelige Stellung gebracht werden. Vorteilhalfterweise wird der Vakuumgreifer nur in einem Teilbereich mit dem Bauteil in Eingriff gebracht, wobei der Bauteil beim Anheben über den gelenkig gelagerten Vakuumgreifer in eine winkelige Stellung gebracht wird, in welcher einzelne Förderelemente der Förderstrecke den Bauteil unterfahren und lastabstützend aufnehmen können.

Bei den einzelnen Förderelementen kann es sich um einzelne Lamellen handeln, welche starr oder flexibel ausgebildet sein können. Die Lamellen können dabei auch mit Bürsten ausgestattet sein, um beispielsweise das Verrutschen von Bauteilen während des Transports hintanzuhalten.

Entsprechend einer vorteilhaften Weiterbildung kann vorgesehen sein, dass an der von den zweiten und/oder ersten Saugern gegenüberliegenden Seite oder Stirnseite des Tragteils und/oder Tragteilelements eine Einrichtung zur Dickenmessung eines flächigen Bauteils vorgesehen ist. Durch eine Dickenmessung während der Aufnahme eines Bauteils kann überprüft werden, ob ein Bauteil mit der für die Weiterverarbeitung auf einer Bearbeitungsmaschine notwendigen Bauteildicke aufgenommen wurde. Weiters kann mithilfe der genannten Einrichtung zur Dickenmessung überprüft werden, ob fehlerbedingt mehrere aneinanderhaftende Bauteile aufgenommen wurden. Zwischen einzelnen Blechplatten kann es prozessbedingt dazu kommen, dass sich Schmierfilme bilden, welche das Aneinanderhaften der Blechplatten verursachen können. Die erfindungsgemäße Vorrichtung eignet sich somit hervorragend zur prozesssicheren Vereinzelung von Bauteilen von einem Bauteilstapel.

Die Dickenmesseinrichtung kann dabei durch elektromechanische, induktive, kapazitive und/oder optische Sensoren gebildet sein.

Insbesondere kann es vorteilhaft sein, wenn an der von den zweiten und/oder ersten Saugern gegenüberliegenden Seite des Tragteils und/oder Tragteilelements eine Andrückeinrichtung für ein flächiges Bauteil vorgesehen ist. Damit kann die Sicherheit beim Transport bzw. Hochheben eines Bauteils zusätzlich erhöht werden, indem zusätzlich zu den Saugern mithilfe der Andrückeinrichtung eine Haltekraft auf den Bauteil aufgebracht wird. Hierbei kann nur eine geringe Andrückkraft, durch beispielsweise bloßes Anlegen der Andrückvorrichtung, aufgebracht werden, um beispielsweise ein seitliches Verkippen zu verhindern, oder sicherzustellen, dass einer oder mehrere der Andrückvorrichtung gegenüberliegenden Sauger vollständig an dem Bauteil angreifen.

Ferner kann vorgesehen sein, dass an der von den zweiten und/oder ersten Sau-gern gegenüberliegenden Seite des Tragteils und/oder Tragteilelements eine kombinierte Andrück- und Dickenmesseinrichtung für ein flächiges Bauteil vorgesehen ist. Hiermit kann eine Dickenmessung des Bauteils während dem Andrücken auf ein Bauteil durchgeführt werden. Darüber hinaus kann vorgesehen sein, dass die Einrichtung zur Dickenmessung einen abgewinkelten Messfinger umfasst, welcher zur Anlage an einem zu vermessenden, flächigen Bauteil vorgesehen ist. Dieser kann schwenkbar bzw. gelenkig an einer Seite des erfindungsgemäßen Vakuumgreifers angeordnet sein und bei Bedarf abgeklappt und mit dem Bauteil in Eingriff gebracht werden. Eine Messung der Bauteildicke kann mithilfe des abgewinkelten Messfingers dadurch erfolgen, indem das Verhältnis zwischen Winkelstellung des Messfingers und Bauteildicke bekannt ist. Je nach Stellung des Messfingers kann somit die Dicke des Bauteils abgeleitet werden.

Vorteilhaft ist auch eine Ausprägung, gemäß welcher vorgesehen sein kann, dass die Andrückeinrichtung zur gesteuerten Aktivierung und Deaktivierung einer Andrückkraft gegenüber dem Messfinger ausgebildet und zur Steigerung und Verringerung einer Haltekraft des Vakuumgreifers gegenüber einem flächigen Bauteil vorgesehen ist. Mithilfe des erfindungsgemäßen Messfingers kann somit, wenn gewünscht, eine gesteuerte Andrückkraft auf den Bauteil aufgebracht werden, um die Prozesssicherheit beim Hebevorgang zu steigern.

Gemäß einer Weiterbildung ist es möglich, dass die Förderelemente der Förderstrecke dazu geeignet sind, ein flächiges Bauteil aus einer mittels des Vakuumgreifers zumindest teilweise oder einseitig angehobenen Position zu unterfahren und lastabstützend aufzunehmen. Dabei kann der Vakuumgreifer, welcher an dem Tragarm um eine horizontal verlaufende Gelenksachse gelenkig gelagert ist, beim Aufgreifen eines Bauteils gemeinsam mit dem darauf befindlichen Bauteil in eine winkelige Stellung gebracht werden. Bei dem Aufbau kann somit darauf verzichtet werden, einen Vakuumgreifer über die gesamte Fläche eines handzuhabenden Bauteils in Eingriff zu bringen. In einer zumindest teilweise oder einseitig angehobenen Position des Bauteils, kann dieser bereits auf die Förderstrecke übergeben werden, indem es von einzelnen Förderelementen lastabstützend aufgenommen wird. Zusätzlich ist bei einem nur teilweisen Eingriff des Vakuumgreifers in Bezug auf die gesamte Bauteilfläche eine geringere Haltekraft, gegenüber dem Eingriff eines Vakuumgreifers über die gesamte Bauteilfläche, notwendig.

Auch kann durch das Verbringen eines Bauteils in eine gegenüber der Förderstrecke befindlichen winkeligen Position, eine prozesssichere und schonende Übergabe an eine Förderstrecke sichergestellt werden, indem ein Verkeilen oder Verspreizen des Bauteils durch die Durchbiegung desselben bei der Übergabe verhindert werden kann.

Die erfindungsgemäße Zuführeinheit ist somit besonders für den automatisierten Einsatz geeignet, wobei beim erfindungsgemäßen Verfahren zum Transport der Bauteile, insbesondere von Blechteilen, zumindest die folgenden Verfahrensschritte ausgeführt werden:
- Bereitstellen einer Zuführeinheit nach zumindest einem der Ansprüche 1 bis 15;
- Verbringen des zumindest einen Tragteilelements von der Mehrzahl von ersten Saugern definierten ersten Ansaugebene ausgehend von einer bezüglich der zweiten Ansaugebene winkelig ausgerichteten Bereitschaftsposition in eine bezüglich der zweiten Ansaugebene deckungsgleiche Arbeitsposition;
- Aufgreifen eines Bauteils mittels des Vakuumgreifers;
- Verfahren von Förderelementen der Förderstrecke aus der Speichereinheit der Zuführeinheit;
- Aufnahme des Bauteils durch Förderelemente der Förderstecke;
- Lösen des Vakuumgreifers vom Bauteil;
- Transport des Bauteils auf der Förderstrecke zu einer Biegeanlage;
- Übergabe des Bauteils an die Biegeanlage.

Auf diese Weise kann ein sicherer und schneller Bauteiltransport zu einer Biegeanlage gewährleistet werden, wobei vorteilhafterweise Bauteile in der richtigen, für die weitere Verarbeitung notwendigen Orientierung, an die Biegeanlage übergeben werden. Falls nach der Aufnahme eines Bauteils von einem Stapel gewünscht ist, den Bauteil in eine alternierende räumliche Lage zu verbringen können folgende Schritte vorgesehen sein:
- Drehen des Bauteils um eine durch den Bauteil definierte horizontale Ebene, wobei diese Drehung mithilfe des Tragarms erfolgt an welchem der Vakuumgreifer gelenkig gelagert ist;
- Ausrichtung des auf der Förderstrecke befindlichen Bauteils durch Verfahren eines Anschlagelements, welches sich auf einer Seite der Tragstruktur befinden kann, in Richtung der Maschinen-x-Achse.

Darüber hinaus kann vorgesehen sein, dass nach dem Aufgreifen des Bauteils von einem Bauteilstapel eine Messung der Bauteildicke erfolgt, um sicherstellen zu können, dass einerseits ein Bauteil mit einer für die Weiterbearbeitung gewünschten Dicke aufgenommen wurde und dass andererseits nur ein einzelnes Bauteil aufgenommen wurde.

Des Weiteren kann vorgesehen sein, dass nach dem Aufgreifen des Bauteils von einem Bauteilstapel eine Andrückeinrichtung an der Unterseite des Bauteils angreift, mit welcher ein Bauteil beim Transport zusätzlich gesichert werden kann.

Gemäß einer besonderen Ausprägung ist es möglich, dass die Förderelemente der Förderstrecke ein flächiges Bauteil, aus einer mittels des Vakuumgreifers verbrachten zumindest teilweise oder einseitig angehobenen Position, unterfahren und lastabstützend aufnehmen. Hierbei ist als besonders vorteilhaft zu erwähnen, dass eine Durchbiegung des aufzunehmenden Bauteils vorrangig entlang einer Bauteillängsachse erfolgt und dieses durch sukzessives unterfahren mit den Förderelementen in eine ebene, plane Position gebracht wird, welche den Weitertransport auf der Förderstrecke ermöglicht.

Mit diesem Verfahrensschritt kann auch verhindert werden, dass bei der Übergabe eines Bauteils von einem Vakuumgreifer an eine Förderstrecke durch unerwünschte Durchbiegung des Bauteils, dieses sich beim Ablegen verkeilt oder verspreizt. Somit kann sichergestellt werden, dass eine schonende und prozesssichere Übergabe und in weiterer Folge ein schneller und sicherer Weitertransport des Bauteils erfolgt.

Bei dem erfindungsgemäßen Verfahren ist es dabei nicht zwingend notwendig, dass der Bauteil vollständig von dem Bauteilstapel abgehoben wird. Begünstigt wird dies wiederum dadurch, dass der Vakuumgreifer an dem Tragarm um eine horizontal verlaufende Gelenksachse gelenkig gelagert sein kann, um somit ein Bauteil aktiv oder schwerkraft- bzw. schwerpunktbedingt in eine Schräglage verbringen zu können. Es kann somit ausreichend sein, einen Teilbereich des Bauteils, über die durch die Förderstrecke definierte horizontale Ebene anzuheben, wobei der Bauteil in einem weiteren Teilbereich an dem Bauteilstapel abgestützt bleiben kann. Sodann kann der Bauteil sukzessive von den Förderelementen unterfahren und vollständig aufgenommen werden, während der Vakuumgreifer vorerst in der beschriebenen Position verbleibt und nachfolgend gegebenenfalls auf die Förderebene der Förderstrecke abgesenkt werden kann.

Vorteilhaft ist dabei weiters, dass die Durchbiegung entlang der Bauteilbreite durch den verstellbaren Vakuumgreifer weitestgehend minimiert oder vollständig verhindert werden kann, was das prozesssichere und schonende Unterfahren des Bauteils mit den Förderelementen zusätzlich begünstigen kann.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Darstellung einer möglichen Anordnung eines Bearbeitungszentrums;
- Fig. 2: eine schematische Darstellung einer möglichen Ausführungsform eines Vakuumgreifers;
- Fig. 3: eine schematische Darstellung des Verschaltungs-/Funktionsprinzips des ersten und zweiten Vakuumkreises, welche unterschiedlichen Saugern (a) oder gleichen Saugern (b) zugeordnet sind;
- Fig. 4: eine mögliche Ausführungsform eines Vakuumgreifers mit Tragteil mit verstellbaren Saugern;
- Fig. 5: eine mögliche Ausführungsform eines Vakuumgreifers mit Tragteil und Tragteilelementen;
- Fig. 6: eine mögliche Ausführungsform eines Vakuumgreifers mit Tragteil und Tragteilelementen in einer Bereitschaftsposition;
- Fig. 7: eine mögliche Ausführungsform eines Vakuumgreifers mit Tragteil und Tragteilelementen und Saugern unterschiedlicher Dimension, bei welcher die Tragteilelemente die Arbeitsposition einnehmen;
- Fig. 8: eine schematische Darstellung einer Zuführeinheit;
- Fig. 9: eine mögliche Ausführungsform eines Vakuumgreifers mit einer gelenkigen Lagerung an einem Tragarm und einer Andrück- bzw. Sensoreinrichtung zur Dickenmessung;
- Fig. 10: ein flächiges Bauteil in einer teilweise bzw. einseitig angehobenen Position, zur Übergabe an eine Förderstrecke;
- Fig. 11: eine mögliche Ausführungsform einer Zuführeinheit in Kombination mit einem Bearbeitungszentrum.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

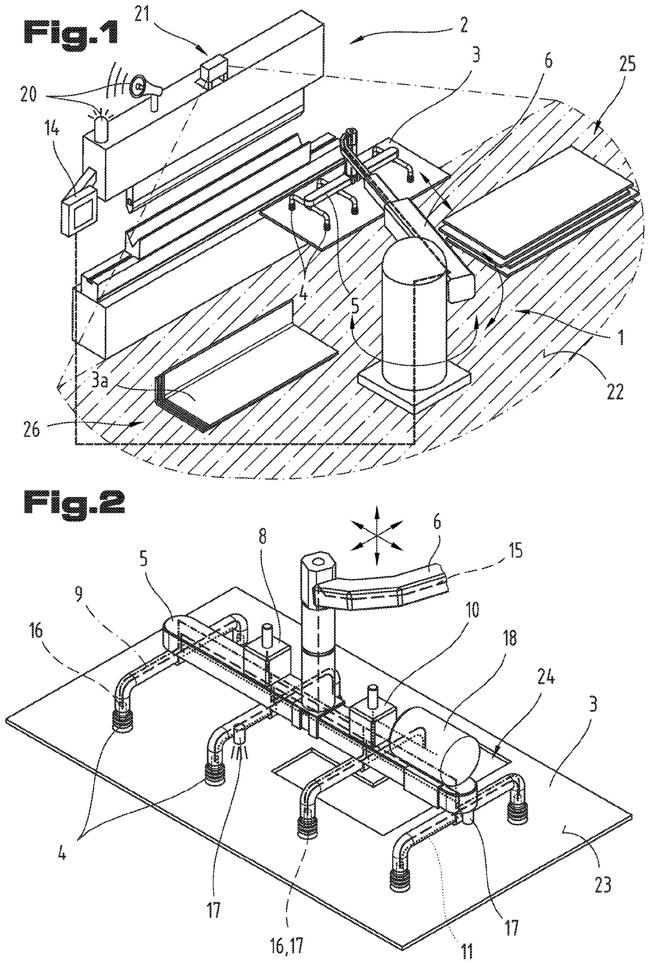

In Fig. 1 ist eine schematische Darstellung eines möglichen Bearbeitungszentrums ersichtlich, worin neben einem einer Bearbeitungsmaschine 2 ein automatisierter Vakuumgreifer 1 ersichtlich ist. Der Vakuumgreifer 1 dient dazu Bauteile 3 von einem Aufnahmeort 25 schnell und sicher zu einer Bearbeitungsmaschine 2 und/oder zu einem Ablageplatz 26 für bearbeitete Bauteile 3a zu transportieren.

Wie aus Fig. 1, insbesondere in Zusammenschau mit Fig. 2 und Fig. 4 und Fig. 5, zu sehen, kann der Vakuumgreifer 1 als mehrachsig beweglicher Manipulator bzw. Roboter ausgebildet sein. Am beweglichen Tragarm 6 ist ein bewegliches Tragteil 5 angeordnet, welches über eine Mehrzahl von Saugern 4 zur Kontaktierung des Bauteils 3 verfügt. Der Bearbeitungsbereich 22 bzw. der Bewegungsbereich des Vakuumgreifers sind der Einfachheit halber gemeinsam mittels einer schraffierten Fläche dargestellt, obwohl dieser Bereich als dreidimensionaler Raum verstanden werden soll. Dieser Bearbeitungsbereich 22 kann von einer Umgebungsüberwachung 21 demnach vorzugsweise dreidimensional überwacht werden, wobei eine Anordnung dieser Umgebungsüberwachung 21 vorzugsweise an einem höhergelegenen Punkt erfolgt, wie z.B. der Bearbeitungsmaschine 2. Alternativ kann eine derartige Umgebungsüberwachung 21 aber auch an einer Hallendecke, oder auch dem Vakuumgreifer 1 selber angeordnet sein. Nicht in Fig. 1 dargestellt, sind dem Fachmann geläufige Lichtschranken oder auch Lichtzäune, welche eigenständig als Umgebungsüberwachung 21 verwendet werden können oder auch in Verbindung mit der zuvor beschriebenen dreidimensionalen Umgebungsüberwachung 21. Eine zusätzliche Unterteilung des Bearbeitungsbereichs 22 in einen Warnbereich und einen weiter innenliegenden Sicherheitsbereich ist ebenso möglich.

In Fig. 1 kann ferner die beispielhafte Anordnung einer Anlagensteuerung 14 an der Bearbeitungsmaschine 2 in Form eines Displays ersehen werden. Die Verbindung zum Vakuumgreifer und etwaiger weiterer Komponenten bzw. Elemente des Bearbeitungszentrums kann kabelgebunden oder auch kabellos über z.B. WiFi oder Bluetooth erfolgen und ist schematisch durch eine strichlierte Linie angedeutet.

Ferner ist in Fig. 1 eine schematische Anordnung von Elementen einer optischen und/oder akustischen Warneinrichtung 20 an der Bearbeitungsmaschine 2 ersichtlich. Zusätzliche oder auch alternative Anordnungen, wie etwa am Vakuumgreifer 1 und insbesondere in Form von optischen Warneinrichtungen 20 am Tragteil sind nicht dargestellt, jedoch für den Fachmann einfach nachvollziehbar.

In Fig. 2 ist eine schematische Darstellung einer möglichen Ausführungsform eines Tragteils 5 mit einer Mehrzahl von daran angeordneten Saugern 4 gezeigt. Wie zuvor erläutert ist das Tragteil 5 beweglich am wiederum beweglichen Tragarm 6 befestigt und eine Druckluftversorgung 15 schematisch angedeutet. Die Druckluftversorgung 15 kann wie durch die strichlierte Linie schematisch dargestellt zur Versorgung des ersten 8 und zweiten Vakuumerzeugers 10 ausgebildet sein. Nicht dargestellt sind die dafür erforderlichen Leitungen. Ebenso ist die Möglichkeit durch die strichlierten Linien angedeutet, die Druckluftversorgung 15 an einzelne oder auch alle Sauger 4 anzuschließen um z.B. eine kontrollierte druckluftunterstützte Unterbrechung des Vakuums an den Saugern 4 gezielt zu unterbrechen oder sogar ein Abblasen des gehaltenen Bauteils 3 zu ermöglichen.

Aus Fig. 2 kann ferner eine mögliche vorteilhafte Anordnung der beiden Vakuumerzeuger 8,10 am Tragteil 5 ersehen werden. Mit dem zweiten Vakuumerzeuger 10 ist ein Vakuumtank 18 verbunden, welcher zur redundanten und schnellen Sicherstellung eines Vakuums im Bedarfsfall dient. Die Ausbildung eines ersten und zweiten Vakuumkreises 9,11 ist nur schematisch durch gepunktete bzw. strich-gepunktete Linien angedeutet, wobei der zweite Vakuumkreis 11 (strich-gepunktete Linien) mit dem Vakuumtank 18 verbunden sein muss.

Der Bauteil 3, welcher in Fig. 2 als vorgebogenes Blechteil mit Ausnehmungen 24 beispielhaft dargestellt ist, wird von den Saugern 4 gehalten welche einer ersten Gruppe 12 von Saugern 4 zugeordnet ist. In der gewählten Ausführungsform soll die Möglichkeit veranschaulicht werden, eine zweite Gruppe 13 von Saugern 4 ebenfalls mit dem Bauteil 3 zu kontaktieren, obwohl beim Normalbetrieb an diesen Saugern 4 kein Vakuum anliegt.

Zudem ist in Fig. 2 die Position von zwei zweiten Sensorvorrichtungen 17 am Tragteil 5 ersichtlich. Diese beispielhafte Anordnung zeigt, dass die als optische Sensoren ausgebildeten zweiten Sensorvorrichtungen 17 eine etwaige Relativbewegung des Bauteils 3 relativ zu den Sensorvorrichtungen 17 und somit auch relativ zum Tragteil 5 relativ einfach detektieren können. Beispielhaft sind auch eine Mehrzahl von ersten Sensorvorrichtungen 16 als strichlierte Elemente angedeutet, welche in Form von Drucksensoren bzw. Druckmesszellen bevorzugt im Leitungsnetz oder auch direkt an den Saugern 4 des ersten und/oder zweiten Vakuumkreises 9,11 angeordnet sein können. Die Überwachung durch die ersten und zweiten Sensorvorrichtungen 16,17 erfolgt fortlaufend von der Aufnahme des Bauteils 3 bis zu einer Ablage innerhalb der Bearbeitungsmaschine 2 oder auch am Ablageplatz 26.

Im Falle einer Unterbrechung oder auch bereits eines vorgebbaren Vakuumverlusts des ersten Vakuumkreises 9 kann die Anlagensteuerung 14 einen Alarm auslösen, welcher zumindest ein nicht dargestelltes Umschaltelement dazu veranlasst den zweiten Vakuumkreis 11 zu aktivieren. Ebenso kann zusätzlich oder auch eigenständig der Alarm ausgelöst werden, wenn eine Relativbewegung des Bauteils 3 von der zumindest einen zweiten Sensorvorrichtung 17 detektiert wird.

Aus Fig. 2 ist besonders gut ersichtlich, dass die räumliche Nähe des Vakuumtanks 18 zum Anlegen eines Vakuums im Bedarfsfall am zweiten Vakuumkreis 11 aufgrund der kurzen Leitungswege begünstigt. Ebenso kann anhand von Fig. 2 insbesondere in Zusammenschau mit Fig. 1 erkannt werden, dass bei Auslösen eines Alarms der Bauteil 3 mittels Tragteil 5 bzw. Tragarm 6 in der Bewegung verlangsamt und/oder in Vertikalrichtung nach unten abgesenkt werden kann um im Falle eines Verlust des Bauteils Schaden für Bediener und/oder Anlagen zu vermeiden.

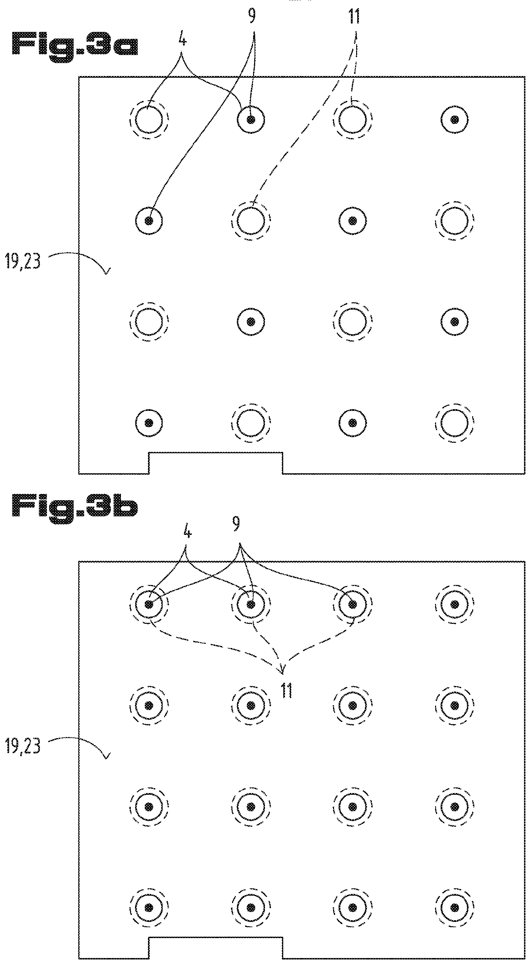

Fig. 3 dient der Veranschaulichung des Verschaltungsprinzips der redundanten Ausführung des zweiten Vakuumkreises 11. In Fig. 3a und Fig. 3b sind beispielhafte Darstellungen von möglichen Anschlussmustern einer Mehrzahl von arrayartig angeordneten Saugern 4 in einen ersten und zweiten Vakuumkreis 9,11 gezeigt. Die Sauger 4 welche dem ersten Vakuumkreis 9 bzw. der ersten Gruppe 12 von Saugern 4 zugeordnet sind, sind durch einen Punkt innerhalb des Saugers 4 gekennzeichnet. Jene Sauger 4, welche der zweiten Gruppe 13 und/oder dem zweiten Vakuumkreis 11 zugeordnet sind, sind durch einen zweiten strichtlierten Ring um den jeweiligen Sauger 4 gekennzeichnet. Die Sauger 4 sind in einer Aufsicht ohne ein Tragteil 5 oder Vakuumerzeuger 8,10 lediglich schematisch angedeutet, wobei in der Bildebene ein Bauteil 3 ersichtlich ist, dessen Oberfläche 23 als eine ideale ebene Fläche als Ansaugebene 19 für die Sauger 4 dient.

In Fig. 3a wird dabei die Möglichkeit gezeigt eine erste Gruppe 12 von Saugern 4 in einem ersten Vakuumkreis 9 zusammenzufassen. Die dargestellte Anordnung jeden zweiten Sauger 4 dem ersten Vakuumkreis 9 zuzuordnen spiegelt nur eine von vielen möglichen Anordnungen wider. Die erste Gruppe 12 von Saugern 4 dient primär der Aufnahme und des Transport eines Bauteils 3, während aus der Draufsicht erkennbar ist, dass die zweite Gruppe 13 von Saugern 4 zwar mit dem Bauteil 3 an der Ansaugebene 19 in Kontakt stehen, jedoch im Normalbetrieb nicht aktiv sind. Im Falle eines Alarms, wird wie zuvor beschrieben der zweite Vakuumkreis 11 aktiviert und der Bauteil 3 kann zumindest kurzzeitig gehalten werden. Nicht dargestellt sind die Leitungen bzw. das Leitungsnetz, welches jeweils zur getrennten Versorgung des ersten und zweiten Vakuumkreises 9,11 in Fig. 3a erforderlich sind.

In Fig. 3b wird eine mögliche alternative Anordnung bzw. Verschaltung mittels einem gemeinsam für den ersten und zweiten Vakuumkreis 9,11 verwendbaren Leitungsnetz angedeutet. Somit kann die erste Gruppe 12 von Saugern 4 gleichzeitig dem ersten und zweiten Vakuumkreis 9,11 zugeordnet sein, wobei im Normalbetrieb nur der erste Vakuumkreis 9, also die Vakuumversorgung mittels des ersten Vakuumerzeugers 8, aktiv ist. Im Notfall bzw. bei einem Alarm kann das Leitungsnetz des ersten Vakuumkreises 9 durch Zu- bzw. Umschalten auf den zweiten Vakuumkreis 11 genutzt werden, wobei das Vakuum an den Saugern 4 durch den Vakuumtank 18 zumindest kurzzeitig aufrechterhalten werden kann.

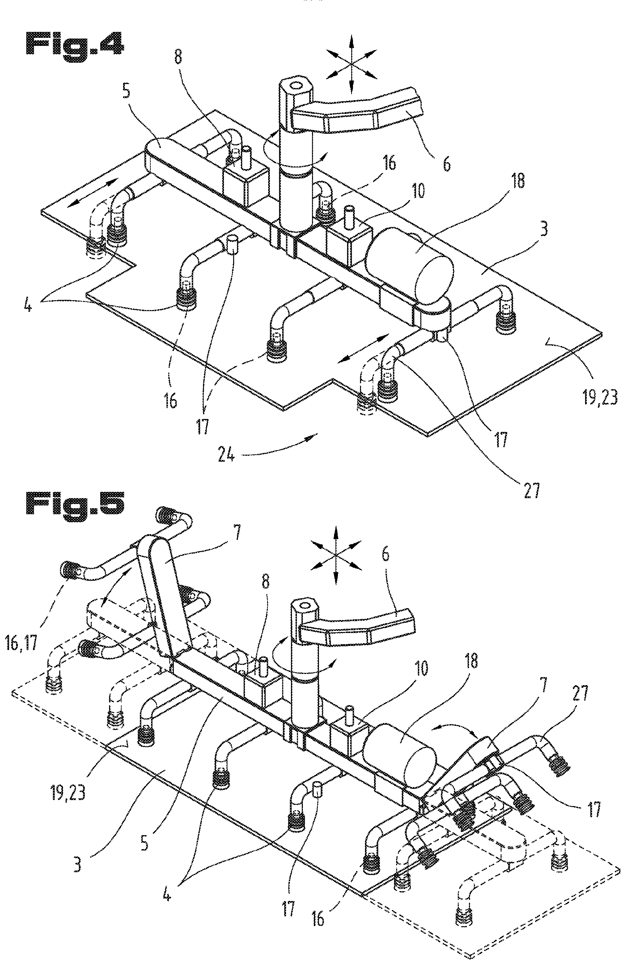

Eine mögliche Ausführungsform für einen Vakuumgreifer 1 mit einem Tragteil 5, welches verstellbare Sauger 4 aufweist, ist beispielhaft in Fig. 4 skizziert. Es können hierbei eine Mehrzahl von Saugern 4 gesehen werden, welche in zumindest eine Richtung der Ansaugebene 19, also im Wesentlichen parallel zu einer zu kontaktierenden Oberfläche 23 des Bauteils, verstellbar sind. Strichliert dargestellt wären Positionen, in denen die Sauger 4 in eine Ausnehmung 24 oder eine Öffnung des Bauteils 3 greifen würden, weshalb in der gewählten Darstellung die Sauger 4 derart verstellt sind, dass ein Kontakt aller Sauger 4 am Bauteil 3 vorliegt. Die Sauger 4 können entweder separat verstellbar ausgebildet sein, oder wie in der beispielhaften Darstellung mittels verstellbaren Halteelementen 27. Die Verstellung der Sauger 4 und/oder der Halteelemente 27 kann mittels nicht näher dargestellter elektrischer und/oder pneumatischer Antriebe realisiert und von der Anlagensteuerung 14 angesteuert werden.

Es ist ferner möglich, dass die Sauger 4 relativ zum Tragteil 5 und/oder einem Halteelement 27 höhenverstellbar und/oder schwenkbar befestigt sind. Auf eine Darstellung einer solchen Ausführungsform wird verzichtet, da für den Fachmann die Lehre ausreichend sein sollte, dass durch diese Maßnahme Unebenheiten und/oder ein Verzug des Bauteils kompensiert werden können.

Darüber hinaus, oder auch als eigenständige Ausführungsform, kann es von Vorteil sein, wenn das Tragteil 5 des Vakuumgreifers 1 einen oder mehrere Tragteilelemente 7 aufweist, welche schwenk- oder rotierbar am Tragteil 5 befestigt sind. Eine mögliche derartige Ausführungsform ist beispielhaft in Fig. 5 dargestellt, worin zwei Tragteilelemente 7 in Vertikalrichtung nach oben geschwenkt sind. Die Tragteilelemente 7 können mittels eigener elektrischer und/oder pneumatischer Antriebe bewegt werden. Durch eine in der Anlagensteuerung 14 hinterlegte Information zu Abmessungen und/oder Geometrie der zu transportierenden Bauteile 3 können die Tragteilelemente 7 bei Bedarf zu einer Vergrößerung oder Verkleinerung der verfügbaren Ansaugebene 19 genutzt werden. Die Tragteilelemente 7 können ebenso verstellbare Halteelemente 27 und/oder verstellbare Sauger 4 aufweisen. Die Ansteuerung, sowie Zuordnung der Sauger 4 zu einem ersten und/oder zweiten Vakuumkreis 9,11 kann analog zu den zuvor genannten Beispielen ausgebildet sein. Wie aus Fig. 5 ersichtlich kann diese Maßnahme zur einfachen, automatisierten Anpassung der verfügbaren Anzahl an Saugern 4 bzw. des Platzbedarfs des Tragteils 5 genutzt werden.

Die in den Fig. 1 und 2, sowie Fig. 4 und 5 dargestellten Vakuumgreifer 1 können einen oder mehrere nicht näher dargestellte zweite Sensorvorrichtungen 17 aufweisen, welche als optische Sensoren ausgebildet sind. Es ist für den Fachmann leicht vorstellbar, derartige Sensoren und insbesondere deren Lichtquellen auch innerhalb eines Saugers 4 anzuordnen, wie dies durch die Fig. 2, 4 und 5 angedeutet ist. Auf eine separate, detaillierte Darstellung der ersten und zweiten Sensorvorrichtungen 16,17 wurde im Rahmen dieser Ausführungen verzichtet, da es dem Fachmann obliegt gemäß den obigen Angaben geeignete Positionen und/oder Sensoren auszuwählen und bedarfsgemäß anzuordnen.

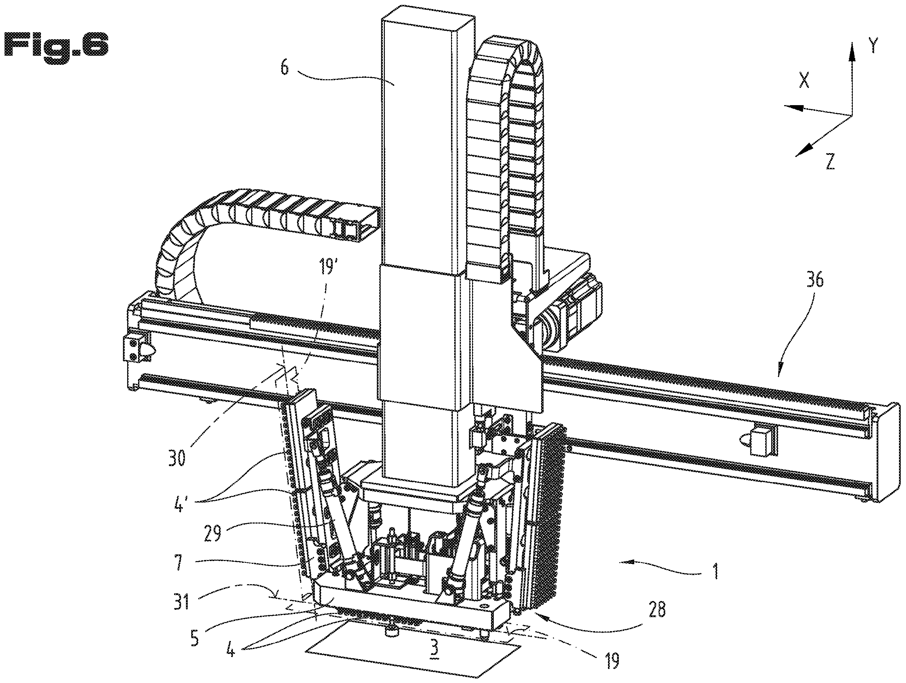

Fig. 6 zeigt einen Vakuumgreifer 1 für flächige Bauteile 3 in einer Bereitschaftsposition 30. Die Unterseite einer Mehrzahl von ersten Saugern 4', welche an einem Tragteilelement 7 angebracht sind, bildet dabei eine erste Ansaugebene 19', welche sich in einer zur zweiten Ansaugebene 19 winkeligen Position befindet. Die zweite Ansaugebene 19 wird durch die Unterseite der an einem Tragteil 5 befindlichen zweiten Sauger 4 definiert.

Aus Fig. 6 ist ersichtlich, dass eine besonders platzsparende Anordnung in einer Bereitschaftsposition 30 erzielt wird, wenn sich Tragteilelemente 7 zu dem Tragteil 5 in einer 90° Position befinden. Das Auf- bzw. Abklappen der flügelartig angeordneten Tragteilelemente 7 erfolgt dabei um eine Lageranordnung 28, mithilfe von elektrischen und/oder pneumatischen Antrieben. Bei der in der Fig. 6 gezeigten beispielhaften Stellanordnung 29, handelt es sich um Stellzylinder, mit welchen die Bewegung um die Lageranordnung 28 realisiert wird.

Der Vakuumgreifer 1 ist dabei über einen Tragarm 6 einer portalartigen Führungsstruktur 36 zugeordnet, an welcher der Vakuumgreifer 1 in x-Richtung der Zuführeinheit gesteuert verfahrbar ist.

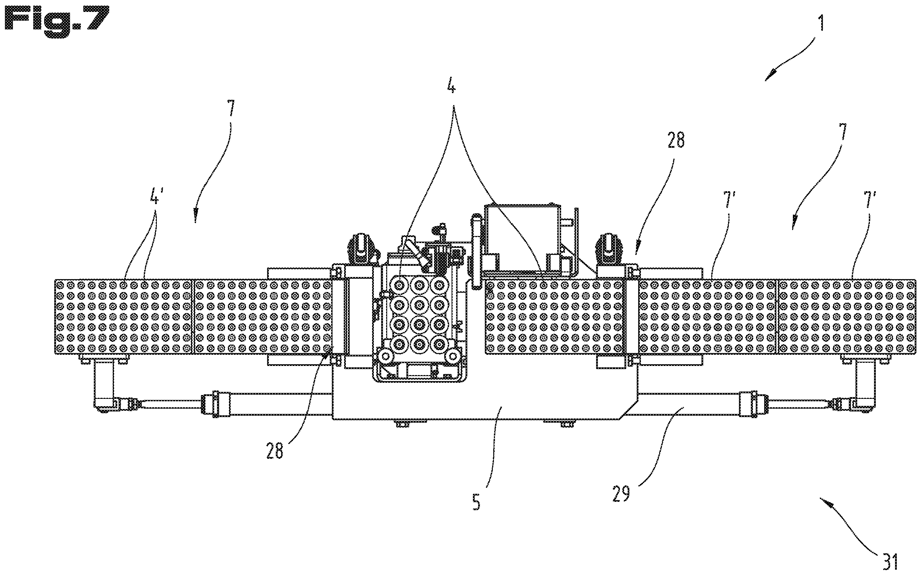

Fig. 7 zeigt eine Detailansicht der Unterseite des Vakuumgreifers 1 in einer Arbeitsposition 31. Die an dem Tragteil 5 an zwei gegenüberliegenden Seiten angeordneten Tragteilelemente 7 sind dabei über die Lageranordnung 28 in die genannte Arbeitsposition 31 gebracht worden. In dieser Position ist es möglich, Bauteile 3 mit einer größeren Breite als das Tragteil 5 über die gesamte Bauteilbreite zu greifen. Die beispielhafte Stellanordnung 29 für das Aus- und Einklappen der Tragteilelemente 7 ist dabei in Form von ausgefahrenen Arbeitszylindern ersichtlich.

Um die Flexibilität des Vakuumgreifers 1 in Bezug auf die handzuhabende Bauteilbreite weiter zu erhöhen, können in einer vorteilhaften Ausführungsform die Tragteilelemente 7 mehrere Tragteil-Einzelelementen 7' umfassen, welche in Fig. 7 schematisch angedeutet sind. Die Verstellung der Tragteil-Einzelelemente 7' erfolgt dabei vorteilhafterweise wiederum mit eigenen elektrischen und/oder pneumatischen Antrieben, wobei ein Verschwenken um eine nicht näher gezeigte Lageranordnung zwischen den Tragteil-Einzelelementen 7' erfolgt.

Aus Fig. 7 geht auch hervor, dass die ersten und/oder zweiten Sauger 4, 4' eine unterschiedliche Dimension in Bezug auf den Sauger-Durchmesser aufweisen können. In der gezeigten Ausführungsvariante weisen die zweiten Sauger 4 am Tragteil 5 unterschiedliche Durchmesser auf, um beispielsweise auch schwere Bauteile sicher handhaben zu können.

Abweichend zu der in Fig. 7 gezeigten Variante, können auch die Sauger 4' an den Tragteilelementen 7 eine zu den am Tragteil 5 angeordneten Saugern 4 alternierende Dimension aufweisen, wobei die Sauger 4 am Tragteil 5 vom gleichen Durchmesser sind.

Zusätzlich zum Durchmesser, können die Sauger 4, 4' in Bezug auf deren Ansaug- bzw. Wirkrichtung auch unterschiedlich hoch ausgeführt sein. Dies ist in den Figuren jedoch nicht näher gezeigt.

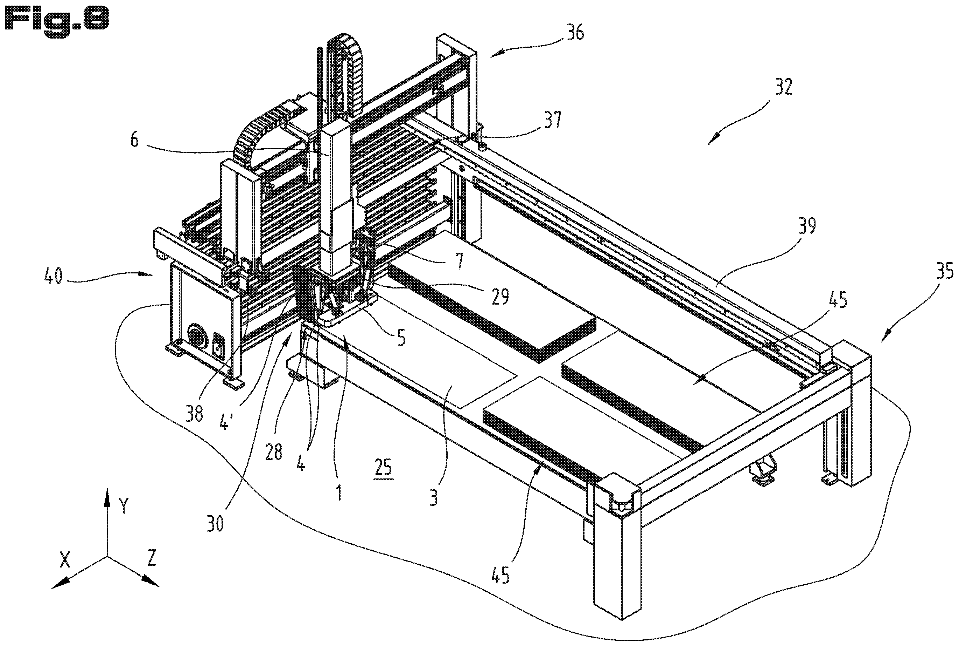

Fig. 8 zeigt eine Zuführeinheit 32 zu einer Biegeanlage 33, auf welcher der Vakuumgreifer 1 angeordnet ist. Der Vakuumgreifer ist über einen Tragarm 6 an einer portalartigen Führungsstruktur 36 angeordnet, welche sich auf einer Tragstruktur 35 abstützt.

Die Seitenteile 39 der Tragstruktur 35 sind dazu geeignet Förderelemente 38 einer Förderstrecke 37 zu führen. Einzelne oder alle Förderelemente 38 können, um einen Aufnahmeort 25 unterhalb der Förderstrecke 37 freizugeben, in eine Speichereinheit 40 verfahren werden. Sind alle oder einzelne Förderelemente 38 in die Speichereinheit 40 eingefahren, kann ein Vakuumgreifer 1 Bauteile 3, welche auf Bauteilstapeln 45 liegen, aufnehmen. Die Bauteilstapel 45 lagern dabei an einem Aufnahmeort 25, welcher sich unterhalb der Tragstruktur 35, in welcher die Förderstrecke 37 in den Seitenteilen 39 geführt wird, befindet.

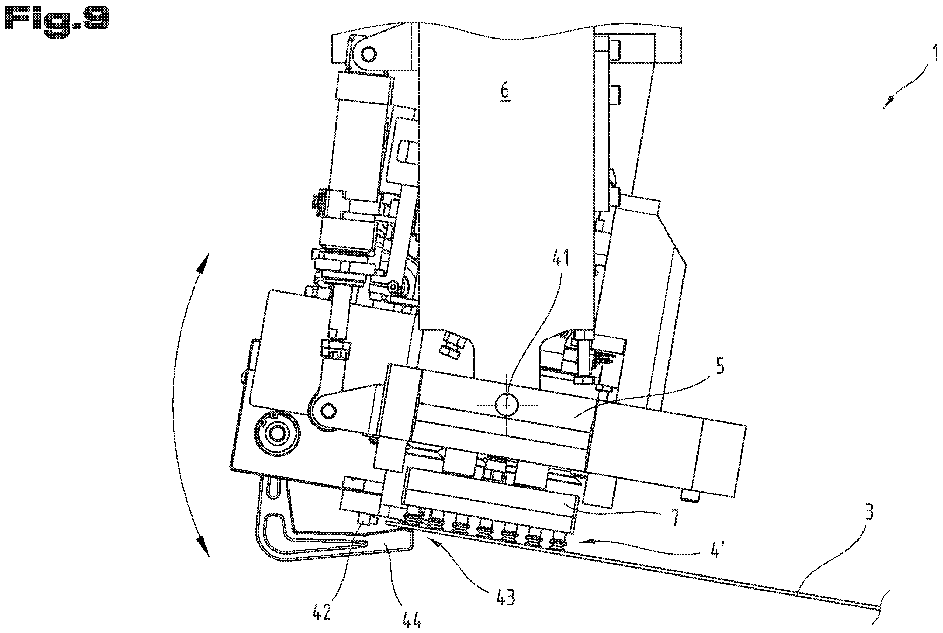

Wie aus Fig. 9 hervorgeht ist der Vakuumgreifer 1 in einer bevorzugten Ausführungsform um eine horizontal verlaufende Gelenksachse 41 an dem bevorzugt mehrachsig beweglichen Tragarm 6 gelagert.

Wie aus einer Zusammenschau der Figuren 6 bis 9 ersichtlich ist, erfolgt die Aufnahme eines Bauteils 3 durch den Vakuumgreifer 1 und die anschließende Übergabe an eine Förderstrecke 37 bevorzugt in folgender Weise:
- Freigabe eines Aufnahmeorts 25 für Bauteilstapel 45 unterhalb einer Förderstrecke 37, durch Verfahren aller oder einzelner Förderelemente 38 der Förderstrecke 37 in die Speichereinheit 40, welcher an einer Stirnseite einer Tragstruktur 35 angeordnet ist;
- Verfahren des Vakuumgreifers 1 zu einem ausgewählten Bauteilstapel 45 mittels der portalartigen Führungsstruktur 36, welcher Bauteilstapel 45 Bauteile 3 mit für die weitere Verarbeitung notwendigen Abmessungen umfasst;
- Verstellung des Vakuumgreifers 1 in die zum Greifen der Bauteile 3 notwendigen Arbeitsbreite in eine Arbeitsposition 31, durch Verschwenken von Tragteilelementen 7 um eine Lageranordnung 28 mithilfe einer Stellanordnung 28, wobei der Vakuumgreifer 1 nur teilweise, bevorzugt in einem vorderen Bereich bezogen auf die Bauteillängsachse, eingreift,
- Aufbringen von Vakuum auf die Sauger (4, 4'), um den Bauteil 3 aufzugreifen und einseitiges bzw. verkipptes Hochheben des Bauteils 3 durch Verfahren des Vakuumgreifers 1 in y-Richtung der Zuführeinheit 32, wobei der Vakuumgreifer 1 um die Gelenksachse 41 am Tragarm 6 geschwenkt wird;
- Sukzessives Unterfahren des in einer winkeligen Stellung, oberhalb der Tragstruktur 35, befindlichen Bauteils 3 durch die Förderelemente 38 der Förderstrecke 37 durch Ausfahren der Förderelemente 38 aus der Speichereinheit 40;
- Abstellen des Vakuums an dem Vakuumgreifer 1 wenn der Bauteil 3 vollständig von den Förderelementen 38 der Förderstrecke 37 unterfahren ist und Übergabe des Bauteils 3 an die Förderstrecke 37 zum Weitertransport des Bauteils 3.

Die Information welche Bauteilabmessungen für eine Bearbeitung auf einer Biegemaschine 34 notwendig sind, sowie das darauf basierende Verfahren und Verstellen eines Vakuumgreifers 1 erfolgt durch eine nicht näher beschriebene elektronische Steuerung.

Auch ist es möglich seitlich an der Tragstruktur 35 ein nicht näher gezeigtes Anschlagelement vorzusehen, mit welchem ein Bauteil 3, welches an die Förderstrecke 37 übergeben wurde, ausgerichtet bzw. plangemäß orientiert werden kann. Dabei kann ein Anschlagelement, welches als Führungsbalken ausgebildet ist, entlang der x-Achse der Zuführeinheit 32 bevorzugt gesteuert verfahren werden.

Zusätzlich wird in Fig. 9 eine optionale Dickenmess- 42 und/oder Andrückeinrichtung 43 gezeigt, welche in einer bevorzugten Ausführungsform einen Messfinger 44 umfasst.

Um sicherzustellen, dass der Vakuumgreifer 1 ein Bauteil 3 in einer für die Weiteverarbeitung notwendigen Dicke aufgenommen hat, kann die Dicke entweder mithilfe einer die Stirnseite des Bauteils 3 vermessenden Dickenmesseinrichtung 42, oder mit dem bereits erwähnten Messfinger 44 überprüft werden.

Bei der Verwendung eines bevorzugt abgewinkelten Messfingers 44 wird die Dicke des Bauteils 3 über die Winkelstellung des Messfingers 44 relativ zu dessen Drehlagerung bestimmt, indem das Verhältnis zwischen Bauteildicke und Winkelstellung des Messfingers 44 bekannt ist und in der nicht näher beschriebenen Steuerung gespeichert ist. Mithilfe der Messung der Bauteildicke kann auch sichergestellt werden, dass nur ein einzelner Bauteil 3 von dem Vakuumgreifer 1 aufgenommen wurde.

Der Messfinger 44 kann dabei gleichzeitig als Andrückeinrichtung 43 eingesetzt werden, indem durch den abgewinkelten Messfinger 44 eine zusätzliche Andrück- bzw. Haltekraft auf den Bauteil 3 aufgebracht wird. Diese Andrück- bzw. Haltekraft kann dabei so gewählt werden, dass es sich um ein bloßes Anlegen des Messfingers 44 handelt und somit ein übermäßiges Verkippen des Bauteils 3 gegenüber den Saugern 4, 4' verhindert wird.

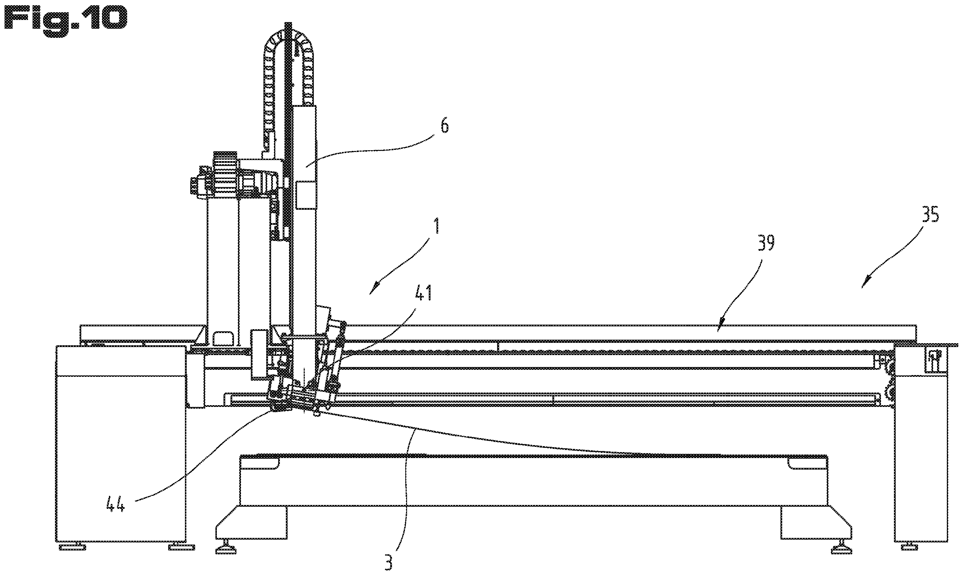

In Fig. 10 wird ein durch den Vakuumgreifer 1 einseitig angehobenes Bauteil 3 gezeigt, welches sich in einer, durch Verkippen des Vakuumgreifers 1 am Tragarm 6 um die Gelenksachse 41, teilweise angehobenen Position befindet. Der Bauteil 3 kann dabei zusätzlich durch den Messfinger 44 gesichert sein. Es ist aus der Fig. 10 gut ersichtlich, dass der Vakuumgreifer 1 an einem seitlichen End- bzw. Teilbereich des Bauteils 3 angreift um dieses hochzuheben.

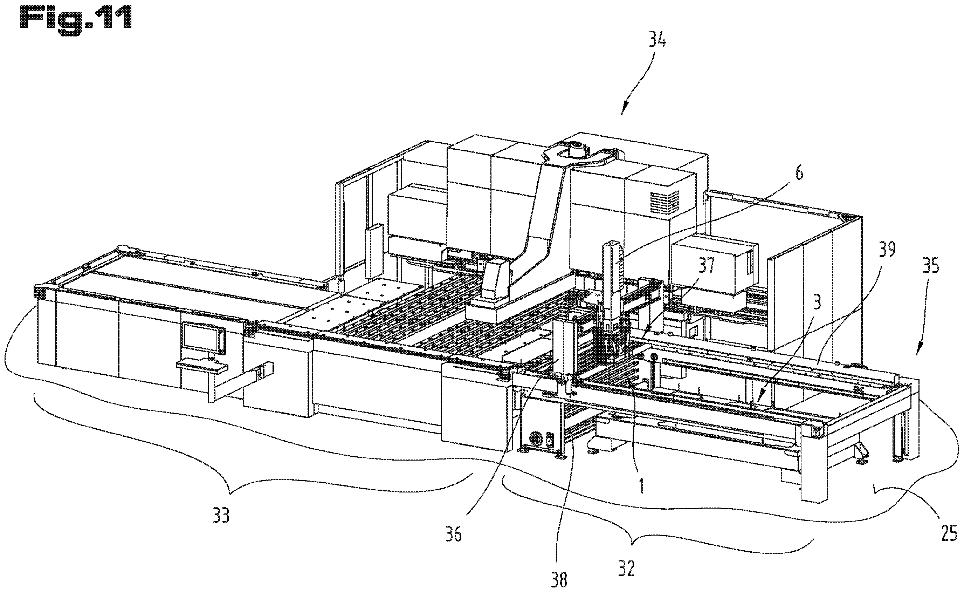

Abschließend wird in Fig. 11 eine Gesamtanlage, umfassend eine Zuführeinheit 32 und eine Biegeanlage 33 gezeigt. Die Zuführeinheit 32 ist wiederum durch eine Tragstruktur 35 gebildet, in welcher Förderelemente 38 einer Förderstrecke 37 relativ zu den Seitenteilen 39 verfahren werden können. Unterhalb der Förderstrecke 37 lagern die Bauteile 3 an einem Aufnahmeort 25, welche von dem Vakuumgreifer 1, welcher an einer portalartigen Führungsstruktur 36 über einen Tragarm 6 angeordnet ist, an die Förderstrecke 37 übergeben werden können und zur Biegeanlage 33 weitertransportiert werden können.

Im Bereich der Biegeanlage 33 erfolgt eine neuerliche Übergabe eines Bauteils 3 von der Förderstrecke 37 an die Biegeanlage 33 wo eine Bearbeitung des Bauteils 3 in einer Biegemaschine 34 erfolgt.

Die Darstellungen der Fig.1 bis Fig.11 stellen mögliche Ausführungsvarianten dar, wobei an dieser Stelle bemerkt sei, dass die Erfindung nicht auf die speziell dargestellten Ausführungsvarianten derselben eingeschränkt ist, sondern vielmehr auch eine oder mehrere Kombinationen der einzelnen Ausführungsvarianten untereinander möglich sind. Der Kürze halber wird auf eine separate Darstellung verzichtet und auf die allgemeine Beschreibung verwiesen.

Der Schutzbereich ist durch die Ansprüche bestimmt. Die Beschreibung und die Zeichnungen sind jedoch zur Auslegung der Ansprüche heranzuziehen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Vakuumgreifer | 27 | Halteelement |
| 2 | Bearbeitungsmaschine | 28 | Lageranordnung |
| 3 | Bauteil | 29 | Stellanordnung |
| 4' | erste Sauger | 30 | Bereitschaftsposition |
| 4 | zweite Sauger | 31 | Arbeitsposition |
| 5 | Tragteil | 32 | Zuführeinheit |
| 6 | Tragarm | 33 | Biegeanlage |
| 7' | Tragteil-Einzelelement | 34 | Biegemaschine |
| 7 | Tragteilelement | 35 | Tragstruktur |
| 8 | erster Vakuumerzeuger | 36 | portalartige Führungsstruktur |
| 9 | erster Vakuumkreis | 37 | Förderstrecke |
| 10 | zweiter Vakuumerzeuger | 38 | Förderelement |
| 11 | zweiter Vakuumkreis | 39 | Seitenteil |
| 12 | erste Gruppe | 40 | Speichereinheit |
| 13 | zweite Gruppe | 41 | Gelenksachse |
| 14 | Anlagensteuerung | 42 | Dickenmesseinrichtung |
| 15 | Druckluftversorgung | 43 | Andrückeinrichtung |
| 16 | erste Sensorvorrichtung | 44 | Messfinger |
| 17 | zweite Sensorvorrichtung | 45 | Bauteilstapel |
| 18 | Vakuumtank | | |
| 19' | erste Ansaugebene | | |
| 19 | zweite Ansaugebene | | |
| 20 | optische und/oder akustische Warneinrichtung | | |
| 21 | Umgebungsüberwachung | | |
| 22 | Bewegungs-/ Bearbeitungsbereichs | | |
| 23 | Oberfläche | | |
| 24 | Ausnehmung | | |
| 25 | Aufnahmeort | | |
| 26 | Ablageplatz | | |

## Patentansprüche

1. Zuführeinheit (32) für flächige Bauteile (3), wie Blechteile oder Metallplatten, zu einer Biegemaschine (34) einer Biegeanlage (33), umfassend
- eine rahmenartige Tragstruktur (35);
- einen Vakuumgreifer (1) für flächige Bauteile (3), umfassend einen Tragteil (5), zumindest ein Tragteilelement (7), eine Mehrzahl von ersten Saugern (4'), welche Mehrzahl von ersten Saugern (4') an dem zumindest einen Tragteilelement (7) angeordnet sind und eine erste Ansaugebene (19') definieren, - eine der rahmenartigen Tragstruktur (35) zugeordneten portalartigen Führungsstruktur (36) für den Vakuumgreifer (1);
- eine Förderstrecke (37), welche in den Seitenteilen (39) der rahmenartigen Tragstruktur (35) verläuft;
**dadurch gekennzeichnet,**
- **dass** der Vakuumgreifer (1) zudem zumindest eine Lageranordnung (28) und zumindest eine Stellanordnung (29) umfasst, wobei das zumindest eine Tragteilelement (7) mittels der zumindest einen Stellanordnung (29) um die zumindest eine Lageranordnung (28) schwenkbar an dem Tragteil (5) gelagert ist, und
- **dass** der Vakuumgreifer (1) mit einer Mehrzahl von zweiten Saugern (4) an dem Tragteil (5) angeordnet sind, wobei die Mehrzahl von zweiten Saugern (4) eine zweite Ansaugebene (19) definieren, und wobei das zumindest eine Tragteilelement (7) mit seiner von der Mehrzahl von ersten Saugern (4') definierten ersten Ansaugebene (19') von einer, bezüglich der zweiten Ansaugebene (19) winkelig ausgerichteten Bereitschaftsposition (30) in eine bezüglich der zweiten Ansaugebene (19) deckungsgleiche Arbeitsposition (31) und vice versa um die zumindest eine Lageranordnung (28) schwenkbar ist;
und
- **dass** die die Förderstrecke (37) ausbildenden Förderelemente (38) gegenüber einer Speichereinheit (40) ein- und ausfahrbar sind

2. Zuführeinheit (32) nach Anspruch 1 **dadurch gekennzeichnet, dass** die portalartige Führungsstruktur (36) für einen Vakuumgreifer (1) einen, bevorzugt mehrachsig, beweglichen Tragarm (6) aufweist, an welchem der Vakuumgreifer (1) angeordnet ist.

3. Zuführeinheit (32) nach Anspruch 1 oder 2 **dadurch gekennzeichnet, dass** der Vakuumgreifer (1) an dem Tragarm (6) um eine horizontal verlaufende Gelenksachse (41) gelenkig gelagert ist.

4. Zuführeinheit (32) nach einem der vorhergehenden Ansprüche **dadurch gekennzeichnet, dass** an der von den zweiten und/oder ersten Saugern (4', 4) gegenüberliegenden Seite oder Stirnseite des Tragteils (5) und/oder Tragteilelements (7) eine Einrichtung zur Dickenmessung (42) eines flächigen Bauteils vorgesehen ist.

5. Zuführeinheit (32) nach einem der vorhergehenden Ansprüche **dadurch gekennzeichnet, dass** an der von den zweiten und/oder ersten Saugern (4', 4) gegenüberliegenden Seite des Tragteils (5) und/oder Tragteilelements (7) eine Andrückeinrichtung (43) für ein flächiges Bauteil (3) vorgesehen ist.

6. Zuführeinheit (32) nach einem der Ansprüche 1 bis 3 **dadurch gekennzeichnet, dass** an der von den zweiten und/oder ersten Saugern (4', 4) gegenüberliegenden Seite des Tragteils (5) und/oder Tragteilelements (7) eine kombinierte Andrück- und Dickenmesseinrichtung (42, 43) für ein flächiges Bauteil vorgesehen ist.

7. Zuführeinheit (32) nach Anspruch 4 oder 6 **dadurch gekennzeichnet, dass** die Einrichtung zur Dickenmessung (42) einen abgewinkelten Messfinger (44) umfasst, welcher zur Anlage an einem zu vermessenden, flächigen Bauteil (3) vorgesehen ist.

8. Zuführeinheit (32) nach Anspruch 7, **dadurch gekennzeichnet, dass** die Andrückeinrichtung (43) zur gesteuerten Aktivierung und Deaktivierung einer Andrückkraft gegenüber dem Messfinger (44) ausgebildet und zur Steigerung und Verringerung einer Haltekraft des Vakuumgreifers (1) gegenüber einem flächigen Bauteil vorgesehen ist.

9. Zuführeinheit (32) nach einem der vorhergehenden Ansprüche **dadurch gekennzeichnet, dass** die Förderelemente (38) der Förderstrecke (37) dazu geeignet sind, ein flächiges Bauteil (3) aus einer mittels dem Vakuumgreifer (1) zumindest teilweise oder einseitig angehobenen Position zu unterfahren und lastabstützend aufzunehmen.

10. Zuführeinheit (32) nach einem der vorhergehenden Ansprüche, **dadurch gekennzeichnet, dass** die ersten Sauger (4') des Tragteilelements (7) zueinander die gleiche Dimension, in Bezug auf Höhe und/oder Durchmesser aufweisen.

11. Zuführeinheit (32) nach einem der vorhergehenden Ansprüche, **dadurch gekennzeichnet, dass** die zweiten Sauger (4) des Tragteils (5) zueinander eine unterschiedliche Dimension, in Bezug auf Höhe und/oder Durchmesser aufweisen.

12. Zuführeinheit (32) nach einem der vorhergehenden Ansprüche, **dadurch gekennzeichnet, dass** die ersten Sauger (4') an einen ersten Vakuumkreis (9) angeschlossen sind und dass die zweiten Sauger (4) an einen zweiten Vakuumkreis (11) angeschlossen sind.

13. Zuführeinheit (32) nach einem der vorhergehenden Ansprüche, **dadurch gekennzeichnet, dass** die Stellanordnung (29) einen mechanischen und/oder pneumatischen Stellantrieb umfasst.

14. Zuführeinheit (32) nach einem der vorhergehenden Ansprüche, **dadurch gekennzeichnet, dass** das Tragteilelement (7) mehrere gelenkig miteinander verbundene Tragteil-Einzelelemente (7') umfasst.

15. Zuführeinheit (32) nach einem der vorhergehenden Ansprüche, **dadurch gekennzeichnet, dass** am Tragteil (5) an einander gegenüberliegenden Seiten j eweils ein Tragteilelement (7) vorgesehen ist.

16. Verfahren zum Transport von flächigen Bauteilen (3), wie Blechteilen oder Metallplatten, zu einer Biegemaschine (34) einer Biegeanlage (33), umfassend folgende Schritte:
- Bereitstellen einer Zuführeinheit (32) nach einem der Ansprüche 1 bis 15;
- Verbringen des zumindest einen Tragteilelements (7) von der Mehrzahl von ersten Saugern (4') definierten ersten Ansaugebene (19') ausgehend von einer bezüglich der zweiten Ansaugebene (19) winkelig ausgerichteten Bereitschaftsposition (30) in eine bezüglich der zweiten Ansaugebene (19) deckungsgleiche Arbeitsposition;
- Aufgreifen (31) eines Bauteils (3) mittels des Vakuumgreifers (1);
- Verfahren von Förderelementen (38) der Förderstrecke (37) aus der Speichereinheit (40) der Zuführeinheit (32);
- Aufnahme des Bauteils (3) durch Förderelemente (38) der Förderstecke;
- Lösen des Vakuumgreifers (1) vom Bauteil (3);
- Transport des Bauteils (3) auf der Förderstrecke (37) zu der Biegeanlage (33);
- Übergabe des Bauteils an die Biegeanlage (33).

17. Verfahren zum Transport von flächigen Bauteilen (3) nach Anspruch 16 **dadurch gekennzeichnet, dass** nach dem Aufgreifen des Bauteils (3) von einem Bauteilstapel (45) eine Messung der Bauteildicke erfolgt.

18. Verfahren zum Transport von flächigen Bauteilen (3) nach Anspruch 16 oder 17 **dadurch gekennzeichnet, dass** nach dem Aufgreifen des Bauteils (3) von einem Bauteilstapel (45) eine Andrückeinrichtung (43) an der Unterseite des Bauteils (3) angreift.

19. Verfahren zum Transport von flächigen Bauteilen (3) nach einem der Ansprüche 16 bis 18 **dadurch gekennzeichnet, dass** die Förderelemente (38) der Förderstrecke (37) ein flächiges Bauteil (3), aus einer mittels des Vakuumgreifers (1) verbrachten zumindest teilweise oder einseitig angehobenen Position, unterfahren und lastabstützend aufnehmen.

20. Verfahren zum Transport von flächigen Bauteilen (3) nach einem der Ansprüche 16 bis 19 umfassend folgende Schritte:
- Freigabe eines Aufnahmeorts (25) für Bauteilstapel (45) unterhalb einer Förderstrecke (37), durch Verfahren aller oder einzelner Förderelemente (38) der Förderstrecke (37) in die Speichereinheit (40) der Zuführeinheit (32), welche an einer Stirnseite einer Tragstruktur (35) angeordnet ist;
- Verfahren des Vakuumgreifers (1) zu einem Bauteilstapel (45) mittels der portalartigen Führungsstruktur (36), welcher Bauteilstapel (45) Bauteile (3) mit für die weitere Verarbeitung notwendigen Abmessungen umfasst;
- Verstellung des Vakuumgreifers (1) in die zum Greifen der Bauteile (3) notwendigen Arbeitsbreite in eine Arbeitsposition (31), durch Verschwenken von Tragteilelementen (7) um eine Lageranordnung (28) mithilfe einer Stellanordnung (28), wobei der Vakuumgreifer (1) nur teilweise, bevorzugt in einem vorderen Bereich bezogen auf die Bauteillängsachse, eingreift;
- Aufbringen von Vakuum auf die Sauger (4, 4'), um den Bauteil (3) aufzugreifen und Hochheben des Bauteils (3) durch Verfahren des Vakuumgreifers (1) in y-Richtung der Zuführeinheit (32), wobei der Vakuumgreifer (1) um die Gelenksachse (41) am Tragarm (6) geschwenkt wird;
- Sukzessives Unterfahren des in einer winkeligen Stellung, oberhalb der Tragstruktur (35), befindlichen Bauteils (3) durch die Förderelemente (38) der Förderstrecke (37) durch Ausfahren der Förderelemente (38) aus der Speichereinheit (40) der Zuführeinheit (32);
- Abstellen des Vakuums an dem Vakuumgreifer (1) wenn der Bauteil (3) vollständig von den Förderelementen (38) der Förderstrecke (37) unterfahren ist und Übergabe des Bauteils (3) an die Förderstrecke (37) zum Weitertransport des Bauteils (3).

## Claims

1. A feed unit (32) for flat components (3), such as sheet metal parts or metal plates, to a bending machine (34) of a bending unit (33), comprising
- a frame-like support structure (35);
- a vacuum gripper (1) for flat components (3), comprising a support part (5), at least one support part element (7), a plurality of first suction elements (4'), which plurality of first suction elements (4') are arranged at the at least one support part element (7) and define a first suction plane (19'),
- a portal-like guiding structure (36) for the vacuum gripper (1), which guiding structure (36) is associated with the frame-like support structure (35);
- a conveyor section (37) running in the lateral parts (39) of the frame-like support structure (35);
**characterized in that**
- the vacuum gripper (1) additionally comprises at least one bearing assembly (28) and at least one actuating assembly (29), wherein the at least one support part element (7) is pivotably mounted at the support part (5) by means of the at least one actuating assembly (29) about the at least one bearing assembly (28), and
- the vacuum gripper (1) with a plurality of second suction elements (4) is arranged at the support part (5), wherein the plurality of second suction elements (4) define a second suction plane (19), and wherein the at least one support part element (7) with its first suction plane (19') defined by the plurality of first suction elements (4') can be pivoted about the at least one bearing assembly (28) from a standby position (30) that is at an angle relative to the second suction plane (19) into a working position (31) that is congruous with the second suction plane (19), and vice versa;
and
- the conveyor elements (38) forming the conveyor section (37) are retractable and extendable relative to a storage unit (40).

2. The feed unit (32) according to claim 1, **characterized in that** the portal-like guiding structure (36) for a vacuum gripper (1) has a support arm (6), which is movable, preferably multiaxially, and at which the vacuum gripper (1) is arranged.

3. The feed unit (32) according to claim 1 or 2, **characterized in that** the vacuum gripper (1) is hingedly mounted at the support arm (6) about a horizontal hinge axis (41).

4. The feed unit (32) according to one of the preceding claims, **characterized in that** on the side or front face of the support part (5) and/or support part element (7) opposite of the second and/or first suction elements (4', 4), a means for measuring the thickness (42) of a flat component is provided.

5. The feed unit (32) according to one of the preceding claims, **characterized in that** on the side of the support part (5) and/or support part element (7) opposite of the second and/or first suction elements (4', 4), a pressing means (43) for a flat component (3) is provided.

6. The feed unit (32) according to one of claims 1 to 3, **characterized in that** on the side of the support part (5) and/or support part element (7) opposite of the second and/or first suction elements (4', 4), a combined pressing and thickness measurement means (42, 43) for a flat component is provided.

7. The feed unit (32) according to claim 4 or 6, **characterized in that** the thickness measurement means (42) comprises a bent measuring finger (44) provided for being applied to a flat component (3) to be measured.

8. The feed unit (32) according to claim 7, **characterized in that** the pressing means (43) is configured for controlled activation and deactivation of a pressing force towards the measuring finger (44) and for increasing and reducing a retention force of the vacuum gripper (1) towards a flat component.

9. The feed unit (32) according to one of the preceding claims, **characterized in that** the conveyor elements (38) of the conveyor section (37) are adapted for moving under a flat component (3) from a position at least partially or one-sidedly lifted by means of the vacuum gripper (1) and receive it in a load-absorbing manner.

10. The feed unit (32) according to one of the preceding claims, **characterized in that** the first suction elements (4') of the support part element (7) have the same dimensions relative to one another with regard to height and/or diameter.

11. The feed unit (32) according to one of the preceding claims, **characterized in that** the second suction elements (4) of the support part (5) have different dimensions relative to one another with regard to height and/or diameter.

12. The feed unit (32) according to one of the preceding claims, **characterized in that** the first suction elements (4') are connected to a first vacuum circuit (9) and that the second suction elements (4) are connected to a second vacuum circuit (11).

13. The feed unit (32) according to one of the preceding claims, **characterized in that** the actuating assembly (29) comprises a mechanical and/or pneumatic actuator.

14. The feed unit (32) according to one of the preceding claims, **characterized in that** the support part element (7) comprises multiple individual support part elements (7'), which are hingedly connected to each other.

15. The feed unit (32) according to one of the preceding claims, **characterized in that** on opposite sides of the support part (5), one support part element (7) is respectively provided.

16. A method for conveying flat components (3), in particular sheet metal parts or metal plates, to a bending machine (34) of a bending unit (33), comprising the following steps:
- providing a feed unit (32) according to one of claims 1 to 15;
- shifting the at least one support part element (7), starting from a first suction plane (19') defined by the plurality of first suction elements (4'), from a standby position (30) that is at an angle relative to the second suction plane (19), into a working position that is congruous with the second suction plane (19);
- picking (31) a component (3) up by means of the vacuum gripper (1);
- moving conveyor elements (38) of the conveyor section (37) from the storage unit (40) of the feed unit (32);
- receiving the component (3) by means of conveyor elements (38) of the conveyor section;
- releasing the vacuum gripper (1) from the component (3);
- conveying the component (3) on the conveyor section (37) to the bending unit (33);
- transferring the component to the bending unit (33).

17. The method for conveying flat components (3) according to claim 16, **characterized in that** after the component (3) has been picked up from a component stack (45), the component thickness is measured.

18. The method for conveying flat components (3) according to claim 16 or 17, **characterized in that** after the component (3) has been picked up from a component stack (45), a pressing means (43) engages with the bottom side of the component (3).

19. The method for conveying flat components (3) according to one of claims 16 to 18, **characterized in that** the conveyor elements (38) of the conveyor section (37) move under a flat component (3) from an at least partially or one-sidedly lifted position shifted by means of the vacuum gripper (1) and receive it in a load-absorbing manner.

20. The method for conveying flat components (3) according to one of claims 16 to 19, comprising the following steps:
- clearing a pick-up location (25) for component stacks (45) underneath a conveyor section (37) by moving all or individual ones of the conveyor elements (38) of the conveyor section (37) into the storage unit (40) of the feed unit (32), which storage unit (40) is arranged at a front face of a support structure (35);
- moving the vacuum gripper (1) to a component stack (45) by means of the portal-like guiding structure (36), which component stack (45) comprises components (3) of dimensions required for further processing;
- adjusting the vacuum gripper (1) into the working width required for gripping the components (3) and into a working position (31) by pivoting support part elements (7) about a bearing assembly (28) by means of an actuating assembly (29), wherein the vacuum gripper (1) only engages partially, preferably in a front area relative to the component longitudinal axis;
- applying a vacuum to the suction elements (4, 4') for picking up the component (3), and lifting the component (3) by moving the vacuum gripper (1) in the y-direction of the feed unit (32), wherein the vacuum gripper (1) is pivoted about the hinge axis (41) at the support arm (6);
- successively moving the conveyor elements (38) of the conveyor section (37) under the component (3), which is in an angled position above the support structure (35), by extending the conveyor elements (38) from the storage unit (40) of the feed unit (32);
- cutting off the vacuum at the vacuum gripper (1) when the conveyor elements (38) of the conveyor section (37) have completely moved under the component (3), and transferring the component (3) to the conveyor section (37) for further conveying of the component (3).

## Revendications

1. Unité d'amenée (32) pour des composants (3) plats, tels que des pièces en tôle ou des plaques métalliques, à destination d'une machine à cintrer (34) d'une installation de cintrage (33), comprenant
- une structure porteuse (35) formant cadre ;
- un préhenseur à vide (1) pour composants (3) plats, comprenant une partie porteuse (5), au moins un élément de partie porteuse (7), une pluralité de premières ventouses (4'), laquelle pluralité de premières ventouses (4') est disposée sur l'au moins un élément de partie porteuse (7) et définit un premier plan d'aspiration (19'),
- une structure de guidage (36) formant portique pour le préhenseur à vide (1) et affectée à la structure porteuse (35) formant cadre ;
- une voie de convoyage (37), laquelle s'étend dans les parties latérales (39) de la structure porteuse (35) formant cadre ;
**caractérisée en ce que**
- le préhenseur à vide (1) comprend en outre au moins un agencement de support (28) et au moins un agencement de manœuvre (29), l'au moins un élément de partie porteuse (7) étant, au moyen de l'au moins un agencement de manœuvre (29), supporté de façon pivotante sur la partie porteuse (5) autour de l'au moins un agencement de support (28), et
- **en ce que** le préhenseur à vide (1) est disposé avec une pluralité de deuxièmes ventouses (4) sur la partie porteuse (5), la pluralité de deuxièmes ventouses (4) définissant un deuxième plan d'aspiration (19), et l'au moins un élément de partie porteuse (7), avec son premier plan d'aspiration (19') défini par la pluralité de premières ventouses (4'), pouvant pivoter autour de l'au moins un agencement de support (28) à partir d'une position d'attente (30) orientée angulairement par rapport au deuxième plan d'aspiration (19), vers une position de travail (31) qui coïncide avec le deuxième plan d'aspiration (19) et vice et versa ;
et
- **en ce que** les éléments de convoyage (38) constituant la voie de convoyage (37) peuvent entrer et sortir par rapport à une unité de stockage (40).

2. Unité d'amenée (32) selon la revendication 1, **caractérisée en ce que** la structure de guidage (36) formant portique pour un préhenseur à vide (1) comporte un bras porteur (6) mobile, de préférence à plusieurs axes, sur lequel est disposé le préhenseur à vide (1).

3. Unité d'amenée (32) selon la revendication 1 ou 2, **caractérisée en ce que** le préhenseur à vide (1) est supporté sur le bras porteur (6) de façon articulée autour d'un axe d'articulation (41) s'étendant horizontalement.

4. Unité d'amenée (32) selon l'une des revendications précédentes, **caractérisée en ce que**, sur le côté ou côté frontal, opposé aux deuxièmes et/ou premières ventouses (4', 4), de la partie porteuse (5) et/ou de l'élément de partie porteuse (7), il est prévu un dispositif de mesure d'épaisseur (42) d'un composant plat.

5. Unité d'amenée (32) selon l'une des revendications précédentes, **caractérisée en ce que**, sur le côté, opposé aux deuxièmes et/ou premières ventouses (4', 4), de la partie porteuse (5) et/ou de l'élément de partie porteuse (7),il est prévu un dispositif de pression (43) pour un composant (3) plat.

6. Unité d'amenée (32) selon l'une des revendications 1 à 3, **caractérisée en ce que**, sur le côté, opposé aux deuxièmes et/ou premières ventouses (4', 4), de la partie porteuse (5) et/ou de l'élément de partie porteuse (7), il est prévu un dispositif combiné de pression et de mesure d'épaisseur (42, 43) pour un composant plat.

7. Unité d'amenée (32) selon la revendication 4 ou 6, **caractérisée en ce que** le dispositif de mesure d'épaisseur (42) comprend un doigt de mesure (44) coudé qui est prévu pour être placé contre un composant (3) plat à mesurer.

8. Unité d'amenée (32) selon la revendication 7, **caractérisée en ce que** le dispositif de pression (43) est constitué pour l'activation et la désactivation commandées d'une force de pression par rapport au doigt de mesure (44) et est prévu pour l'augmentation et la réduction d'une force de retenue du préhenseur à vide (1) par rapport à un composant plat.

9. Unité d'amenée (32) selon l'une des revendications précédentes, **caractérisée en ce que** les éléments de convoyage (38) de la voie de convoyage (37) sont conçus pour passer sous un composant plat (3) ou recevoir ce composant en supportant sa charge à partir d'une position au moins partiellement ou unilatéralement soulevée au moyen d'un préhenseur à vide (1).

10. Unité d'amenée (32) selon l'une des revendications précédentes, **caractérisée en ce que** les premières ventouses (4') de l'élément de partie porteuse (7) présentent la même distance entre elles en ce qui concerne la hauteur et/ou au diamètre.

11. Unité d'amenée (32) selon l'une des revendications précédentes, **caractérisée en ce que** les deuxièmes ventouses (4) de la partie porteuse (5) présentent entre elles une dimension différentes en ce qui concerne la hauteur et/ou au diamètre.

12. Unité d'amenée (32) selon l'une des revendications précédentes, **caractérisée en ce que** les premières ventouses (4') sont raccordées à un premier circuit de vide (9) et **en ce que** les deuxièmes ventouses (4) sont raccordées à un deuxième circuit de vide (11).

13. Unité d'amenée (32) selon l'une des revendications précédentes, **caractérisée en ce que** l'agencement de manœuvre (29) comprend un servomoteur mécanique et/ou pneumatique.

14. Unité d'amenée (32) selon l'une des revendications précédentes, **caractérisée en ce que** l'élément de partie porteuse (7) comprend plusieurs éléments individuels de partie porteuse (7') raccordés entre eux de façon articulée.

15. Unité d'amenée (32) selon l'une des revendications précédentes, **caractérisée en ce que** respectivement un élément de partie porteuse (7) est prévu sur la partie porteuse (5) sur des côtés opposés entre eux.

16. Procédé de transport de composants (3) plats, tels que des pièces en tôle ou des plaques métalliques, à destination d'une machine à cintrer (34) d'une installation de cintrage (33), comprenant les étapes suivantes :
- fourniture d'une unité d'amenée (32) selon l'une des revendications 1 à 15 ;
- transfert de l'au moins un élément de partie porteuse (7), en partant du premier plan d'aspiration (19') défini par la pluralité de premières ventouses (4'), d'une position d'attente (30) orientée angulairement par rapport au deuxième plan d'aspiration (19) vers une position de travail qui coïncide avec le deuxième plan d'aspiration (19) ;
- préhension (31) d'un composant (3) au moyen du préhenseur à vide (1) ;
- déplacement d'éléments de convoyage (38) de la voie de convoyage (37) à partir de l'unité de stockage (40) de l'unité d'amenée (32) ;
- réception du composant (3) par des éléments de convoyage (38) de la voie de convoyage;
- séparation entre le préhenseur à vide (1) et le composant (3) ;
- transport du composant (3) à partir de la voie de convoyage (37) vers l'installation de cintrage (33) ;
- remise du composant à l'installation de cintrage (33).

17. Procédé de transport des composants (3) plats selon la revendication 16, **caractérisé en ce que**, après la préhension du composant (3) à partir d'une pile de composants (45), une mesure de l'épaisseur du composant est effectuée.

18. Procédé de transport des composants (3) plats selon la revendication 16 ou 17, **caractérisé en ce que**, après la préhension du composant (3) à partir d'une pile de composants (45), un dispositif de pression (43) agit au niveau du côté inférieur du composant (3).

19. Procédé de transport des composants (3) plats selon l'une des revendications 16 à 18, **caractérisé en ce que** les éléments de convoyage (38) de la voie de convoyage (37) passent sous un composant plat (3) ou reçoivent ce composant en supportant sa charge à partir d'une position au moins partiellement ou unilatéralement soulevée transférée au moyen du préhenseur à vide (1).

20. Procédé de transport de composants (3) plats selon l'une des revendications 16 à 19, comprenant les étapes suivantes :
- libération d'un lieu de réception (25) pour des piles de composants (45) au-dessous d'une voie de convoyage (37), par le déplacement de tous ou de certains éléments de convoyage (38) de la voie de convoyage (37) vers l'unité de stockage (40) de l'unité d'amenée (32), laquelle est disposée sur un côté frontal d'une structure porteuse (35) ;
- déplacement du préhenseur à vide (1) vers une pile de composants (45) au moyen de la structure de guidage (36) formant portique, laquelle pile de composants (45) comprend des composants (3) ayant des dimensions nécessaires pour la suite du traitement ;
- translation, vers une position de travail (31), du préhenseur à vide (1) dans la largeur de travail nécessaire à la préhension des composants (3), par pivotement d'éléments de partie porteuse (7) autour d'un agencement de support (28) à l'aide d'un agencement de manœuvre (28), le préhenseur à vide (1) n'intervenant que partiellement, de préférence dans une zone antérieure par rapport à l'axe longitudinal de composant ;
- application de vide sur les ventouses (4, 4') pour agripper le composant (3) et soulever le composant (3) par déplacement du préhenseur à vide (1) dans la direction y de l'unité d'amenée (32), le préhenseur à vide (1) étant amené à pivoter autour de l'axe d'articulation (41) sur le bras porteur (6) ;
- passage successif sous le composant (3) situé dans une position angulaire, au-dessus de la structure porteuse (35), par les éléments de convoyage (38) de la voie de convoyage (37) en faisant sortir des éléments de convoyage (38) hors de l'unité de stockage (40) de l'unité d'amenée (32) ;
- coupure du vide sur le préhenseur à vide (1) quand les éléments de convoyage (38) de la voie de convoyage (37) passent entièrement sous le composant (3), et remise du composant (3) à la voie de convoyage (37) pour la poursuite du transport du composant (3).
